# EUROPEAN PATENT APPLICATION

(11) **EP 4 580 259 A1**
(43) Date of publication of application: **02.07.2025**
(21) Application number: 23870834.1
(22) Date of filing: 26.09.2023
(51) Int. Cl.: H04W 36/08, H04W 36/30, H04W 40/36, H04W 76/11, H04M 1/72454, H04M 1/72457

(54) **ACCESS SWITCHING METHOD FOR DEVICE, AND ELECTRONIC DEVICE**

(30) Priority: 30.09.2022 CN 202211215693
(71) Applicant: Huawei Technologies Co., Ltd., Shenzhen, Guangdong 518129 (CN)
(72) Inventor: CHEN, Yipan, Shenzhen, Guangdong 518129 (CN); XIONG, Feng, Shenzhen, Guangdong 518129 (CN)
(74) Representative: Epping - Hermann - Fischer
(86) International application number: PCT/CN2023/121625
(87) International publication number: WO 2024/067606

(57) **Abstract**

A device access switching method and an electronic device are provided, and relate to the field of terminal technologies, to improve communication quality of a device. The method is applied to a first electronic device, and the method includes: displaying a first interface, where the first interface includes an identifier of at least one second electronic device; receiving an operation of a user on an identifier of a first target device in the at least one second electronic device; and sending a switching request in response to the operation, where the switching request is used to request to switch the first target device from a source access point to which the first target device is currently connected to a target access point.

## Description

This application claims priority to Chinese Patent Application No. 202211215693.7, filed with the China National Intellectual Property Administration on September 30, 2022 and entitled "DEVICE ACCESS SWITCHING METHOD AND ELECTRONIC DEVICE", which is incorporated herein by reference in its entirety.

### TECHNICAL FIELD

This application relates to the field of terminal technologies, and in particular, to a device access switching method and an electronic device.

### BACKGROUND

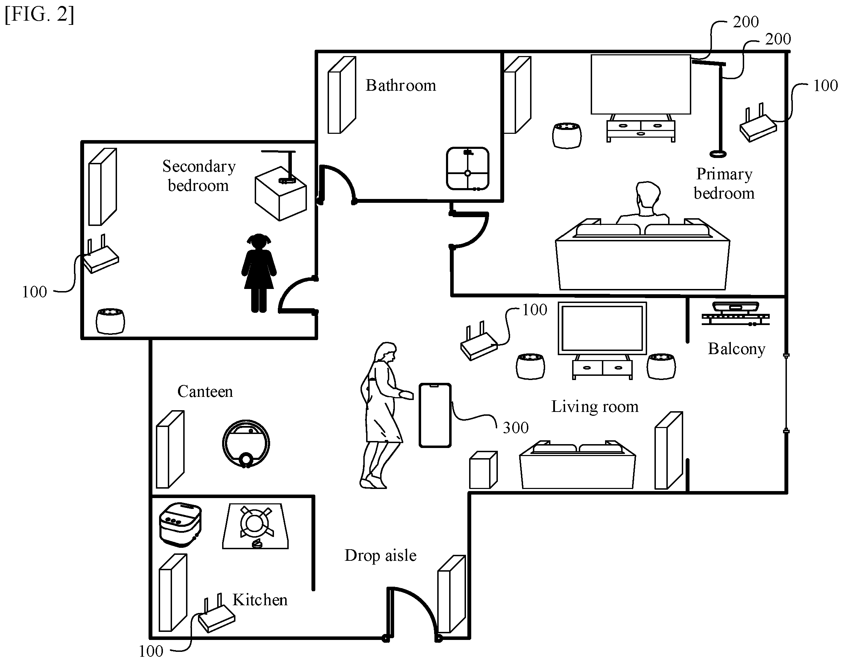

With the development of technologies, a user has an increasing quantity of devices. In a home scenario shown in FIG. 2, various devices (such as an audio and video device, a lighting system device, an environment control device, and a security protection device) at home are connected together through an internet of things technology to form a smart home system, to implement centralized control of the devices, and provide the user with a plurality of functions such as home appliance control, lighting control, and anti-theft alarm.

In the home scenario, a plurality of access points (such as routers) may be deployed to implement comprehensive network coverage. A specific device may establish a connection to a specific access point to implement a network access function. In some cases, due to a factor like a network status change, current network access experience of the device may be poor. Therefore, a method that can improve network access experience of a smart home device needs to be urgently proposed.

### SUMMARY

This application provides a device access switching method and an electronic device, to reduce a probability that a device is unexpectedly disconnected from a network, and improve network access experience of a user.

To achieve the foregoing objective, this application provides the following technical solutions.

According to a first aspect, this application provides a device access switching method, applied to a first electronic device or a chip system, where the method includes: displaying a first interface, where the first interface includes an identifier of at least one second electronic device; receiving an operation of a user on an identifier of a first target device in the at least one second electronic device; and sending a switching request in response to the operation, where the switching request is used to request to switch the first target device from a source access point to which the first target device is currently connected to a target access point.

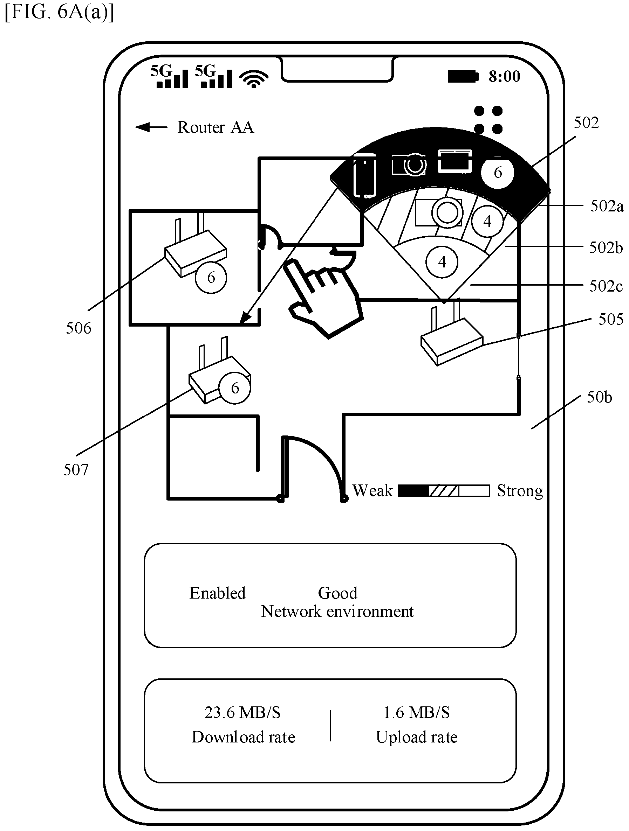

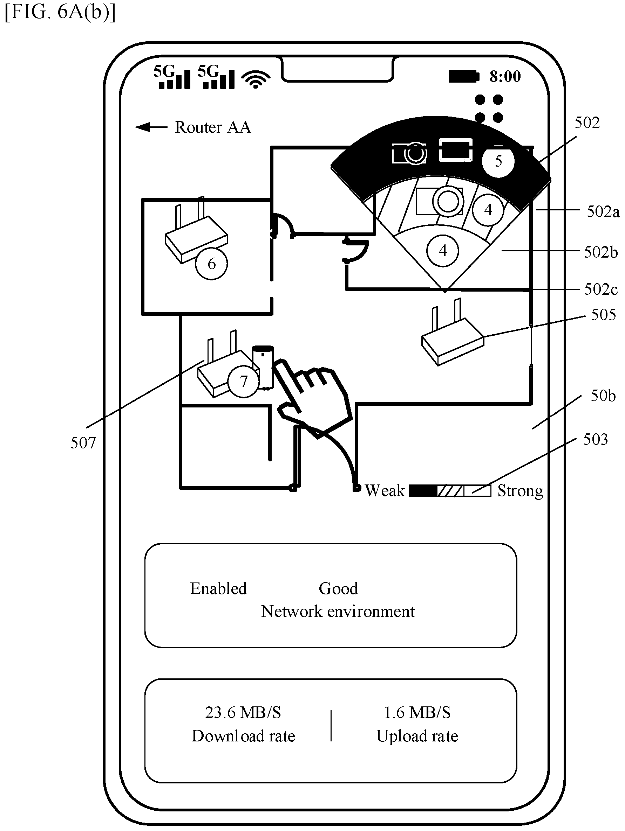

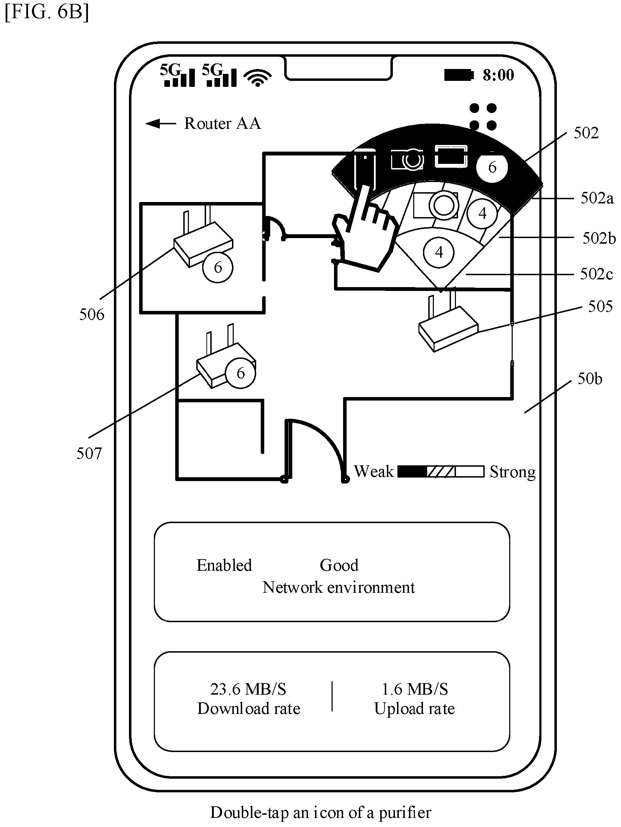

For example, as shown in FIG. 6B, a mobile phone displays an interface 50b (an example of the first interface), and the interface 50b includes identifiers of devices (the at least one second electronic device) such as a purifier, a projector, and a tablet. For example, when detecting a double-tap operation of the user on an identifier of the purifier (the first target device), the mobile phone sends a switching request, where the switching request is used to request to switch the purifier from a currently connected router 505 (the source access point) to a router (the target access point) with a better signal.

In the foregoing solution, in comparison with a case in which a device is accidentally disconnected from a network in a network access process of the user, resulting in poor network access experience of the user, in the technical solution in embodiments of this application, the user actively controls the device to complete access point switching through the first interface, which means that interruption of a service of the device in a switching process can be predicted by the user. In this way, network access experience of the user is generally not affected.

In addition, the foregoing solution can effectively avoid a phenomenon that a sticky device is always connected to an access point with a poor signal, and improve communication quality of a sticky terminal.

In a possible design, the first interface includes a first display component, the first display component includes a first partition, and the first partition includes an identifier of a second electronic device that is connected to the source access point and whose communication quality is within a first range; and/or the first partition includes an identifier of a second electronic device that is not connected to the source access point, whose signal can be detected by the source access point, and whose communication quality is within the first range. The first partition includes the identifier of the at least one second electronic device.

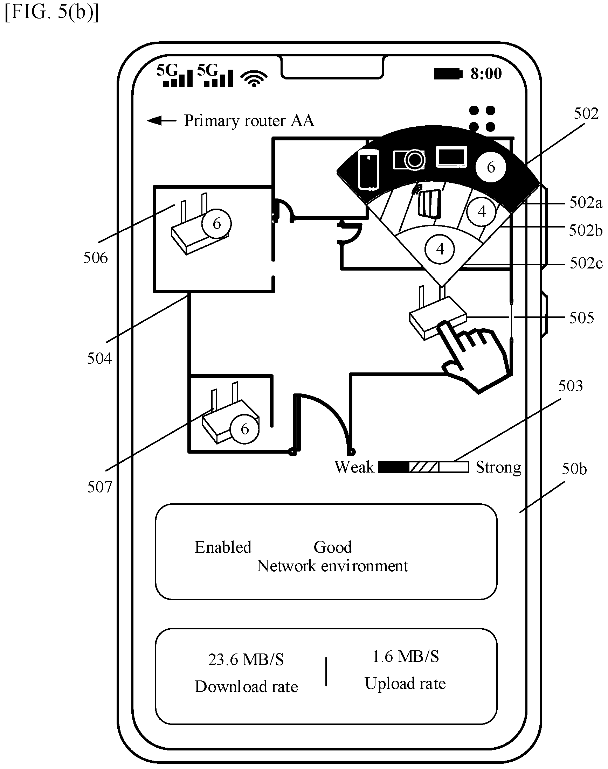

For example, as shown in FIG. 5(b), the mobile phone displays the interface 50b (an example of the first interface), the interface 50b includes a component 502 (an example of the first display component), the component 502 includes a recommendation partition 502a (the first partition), and the recommendation partition includes an identifier of a device (the second electronic device) like a purifier, a projector, or a tablet that is connected to the router 505 (the source access point) and whose communication quality is within the first range; and/or the recommendation partition includes an identifier of another device that is not connected to the router 505, whose signal can be detected, and whose communication quality is within the first range.

In a possible design, the first interface further includes a second partition, and communication quality of an electronic device in the first partition is lower than communication quality of an electronic device in the second partition.

For example, as shown in FIG. 5(b), the interface 50b (the first interface) further includes a partition 502b (an example of the second partition). Communication quality of an electronic device in the partition 502a is lower than communication quality of an electronic device in the partition 502b.

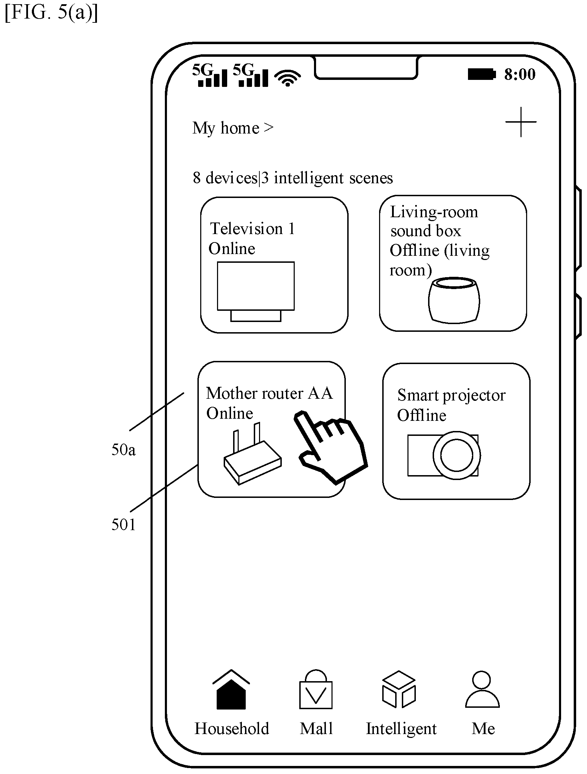

In a possible design, a user interface UI effect of the first partition is different from a UI effect of the second partition. For example, as shown in FIG. 5(b), a UI effect of the partition 502a is different from a UI effect of the partition 502b.

In this way, through the first interface (for example, the interface 50b shown in FIG. 5(b)) presented by the mobile phone, the user can clearly and intuitively learn of communication quality of each device in a whole house. In this way, the user can control the first interface based on communication quality of a corresponding device, to control the device to complete access point switching, so as to improve network connection quality of the device, and improve network access experience of the user.

In a possible design, the first partition includes an identifier of an electronic device whose communication quality is within the first range within a specified space range.

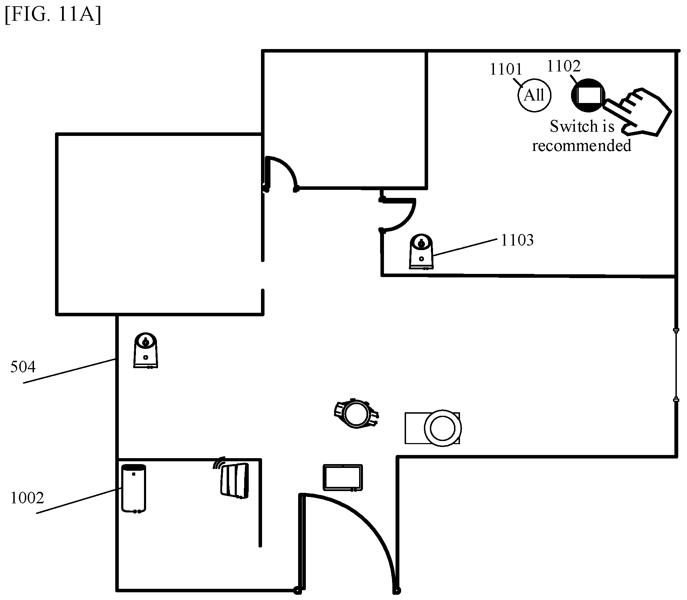

For example, as shown in FIG. 11A, the mobile phone may display, in a floor plan, an identifier of a device with poor communication quality (namely, a device that is recommended to switch an access point) in the whole house. A region in which devices with poor communication quality are located may form the first partition.

Alternatively, the mobile phone may display, in the floor plan, an identifier of a device with medium communication quality or an identifier of a device with good communication quality in the whole house. Alternatively, the mobile phone may display, in the floor plan, all online devices in the whole house.

Alternatively, the mobile phone may be further configured to display, in the floor plan, an identifier of a device in specific space at home. For example, a control may be set in an interface of the mobile phone, and the user may select, through the control, to view an identifier of a device in specific space (for example, a living room) at home. For another example, the mobile phone may detect space in which the user is currently located, and display, in an interface, an identifier of a device in the current space (for example, a living room). In this way, the user may perform access point switching management on one or more devices in the interface through the interface displayed by the mobile phone, to improve communication quality of the corresponding devices. In a possible design, the method further includes:
receiving a view indication of the user for an electronic device whose communication quality is within the first range; and
displaying a second display component in response to the view indication, where the second display component includes a third partition corresponding to the first partition, and the third partition includes the identifier of the at least one second electronic device and an identifier of at least one other electronic device whose communication quality is within the first range.

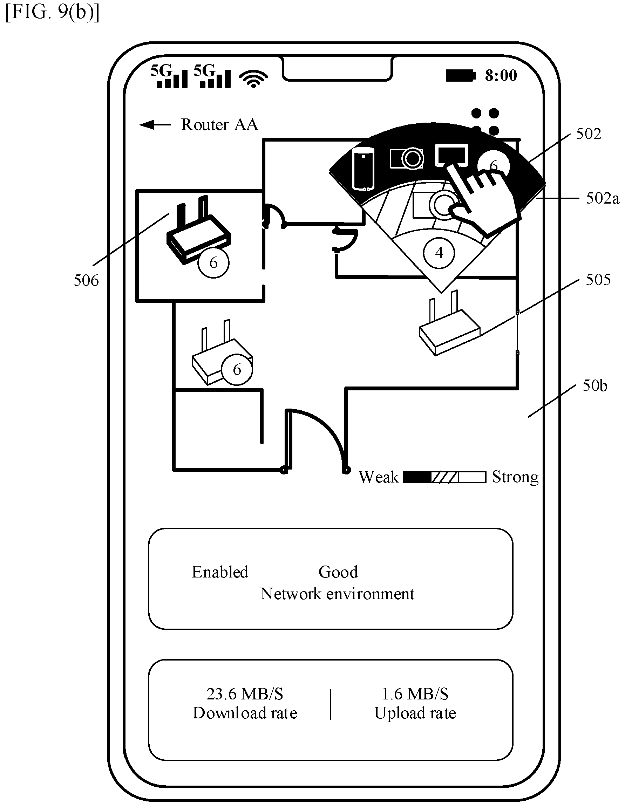

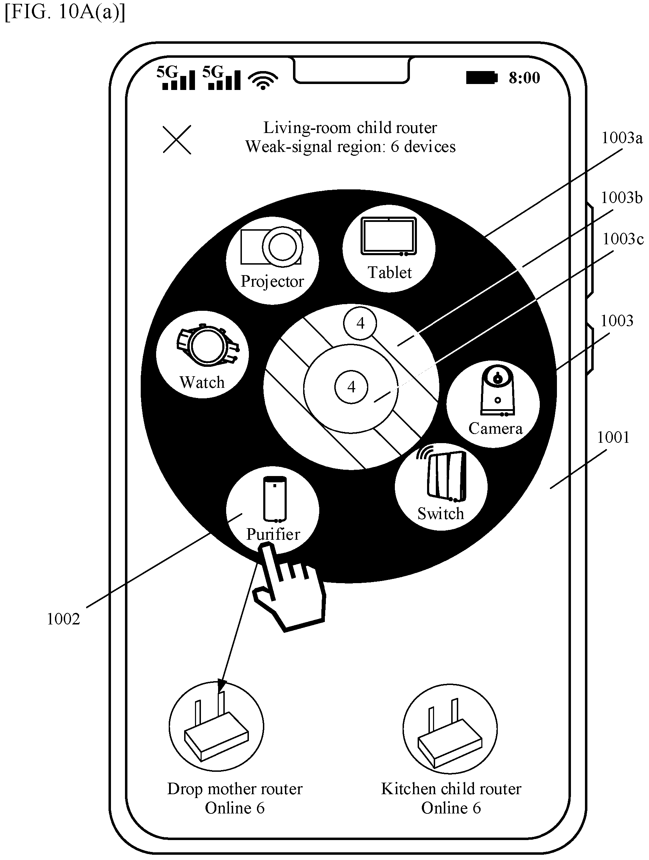

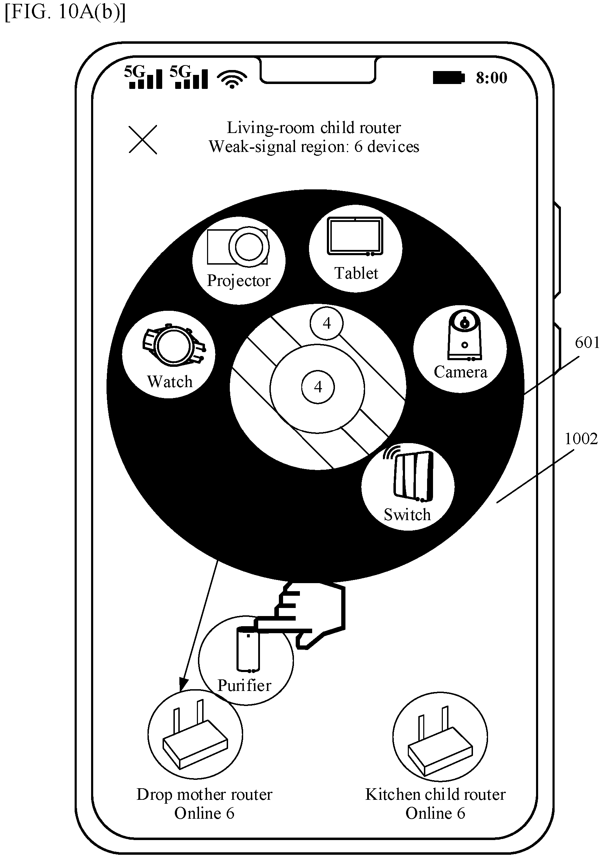

For example, in FIG. 9(b), after detecting an operation of tapping the partition 502a by the user, the mobile phone may display a display component 1003 (an example of the second display component) shown in FIG. 10A(a). The display component 1003 includes a partition 1003a (the third partition) corresponding to the recommendation partition, and the partition 1003a includes an identifier of a device (the identifier of the at least one second electronic device) in the partition 502a and an identifier of at least one other electronic device (for example, a camera, a watch, or a switch) whose communication quality is within the first range.

In this way, the first electronic device can display identifiers of more devices whose communication quality is within the first range, so that the user can control, based on the identifiers of these devices, a corresponding device to perform access point switching.

In a possible design, the method further includes:
receiving a view operation of the user for an electronic device whose communication quality is within the first range or a second range; and
in response to the view operation of the user, displaying, in the corresponding first partition or second partition, a hidden identifier of the electronic device whose communication quality is within the first range or the second range.

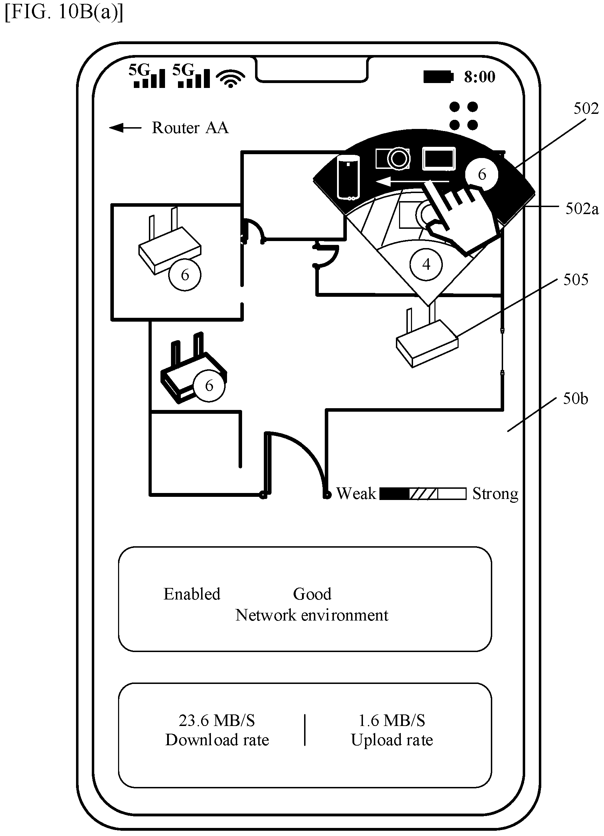

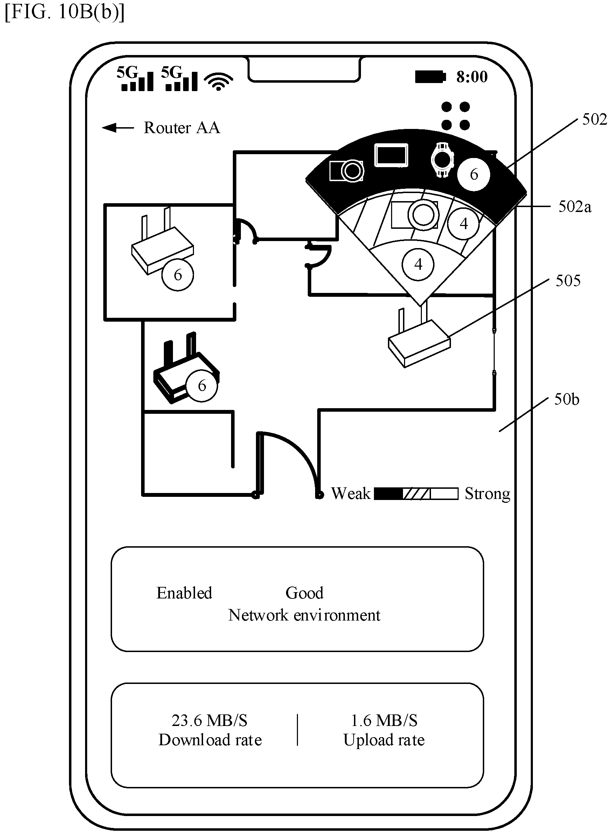

For example, in response to an operation, for example, a left slide operation, entered by the user in the partition 502a in FIG. 10B(a), as shown in FIG. 10B(b), a hidden identifier of an electronic device (for example, a watch) whose communication quality is within the second range is displayed in the partition 502a.

In a possible design, the first interface further includes an identifier of at least one access point, and the at least one access point includes the target access point; and
the receiving an operation of a user on an identifier of a first target device in the at least one second electronic device includes:
receiving an operation of dragging, by the user, the identifier of the first target device to a target region, where the target region is a region in which the identifier of the target access point is located.

For example, as shown in FIG. 6A(a) and FIG. 6A(b), the mobile phone displays the interface 50b (the first interface). It is detected that the user drags the identifier of the purifier (an example of the first target device) from the router 505 to a region in which an identifier of a router 507 (the target access point) is located, for example, drags the identifier of the purifier onto the identifier of the router 507.

In a possible design, the receiving an operation of dragging, by the user, the identifier of the first target device to a target region includes: receiving an operation of dragging, by the user, the identifier of the first target device to a location of the identifier of the target access point to present a collision effect. For example, still as shown in FIG. 6A(a) and FIG. 6A(b), the user may drag the identifier of the purifier to a location of the identifier of the router 507, to present a collision effect. In this way, the user may select a device in a weak-signal partition, and drag the device to a target router, to control the device to switch to the target router, so as to implement network planning of the device, and improve communication quality of the device.

In a possible design, if a signal of the target router is poorer than a signal of a current router, the first electronic device may prompt the user of this case, to reduce a probability of switching the device to a router with a poorer signal.

In a possible design, the method further includes:
displaying a notification message, where the notification message is used to prompt that current communication quality of the first target device is poor; and
the displaying a first interface includes: displaying the first interface in response to an operation of the user on the notification message.

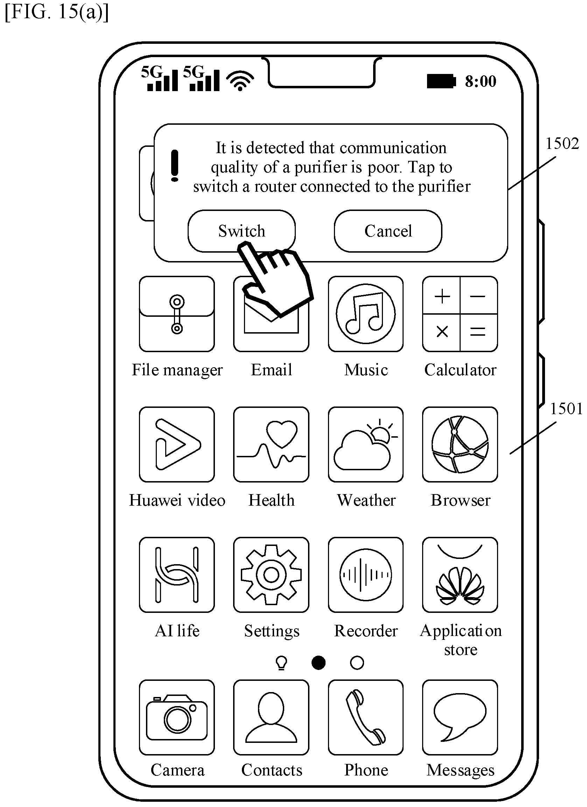

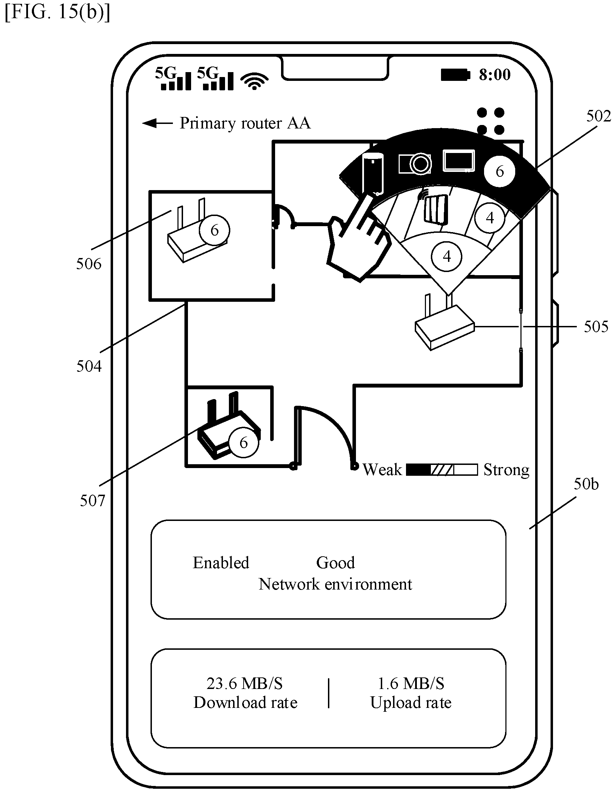

For example, in FIG. 15(a), the mobile phone displays a notification message 1502, and in response to an operation (for example, tapping a "switch button" corresponding to the notification message) performed by the user on the notification message, the mobile phone may display a first interface shown in FIG. 15(b).

In this solution, when detecting that a signal of a new router is stronger than that of an original router, a system may prompt the user to start the first interface, to perform an operation related to access point switching on the device through the first interface. In this way, the user can implement better network planning in a timely manner, and network access performance of a related device is improved.

In a possible design, the sending a switching request includes: sending the switching request to a decision access point, where the decision access point is the source access point, or the target access point, or an access point other than the source access point and the target access point.

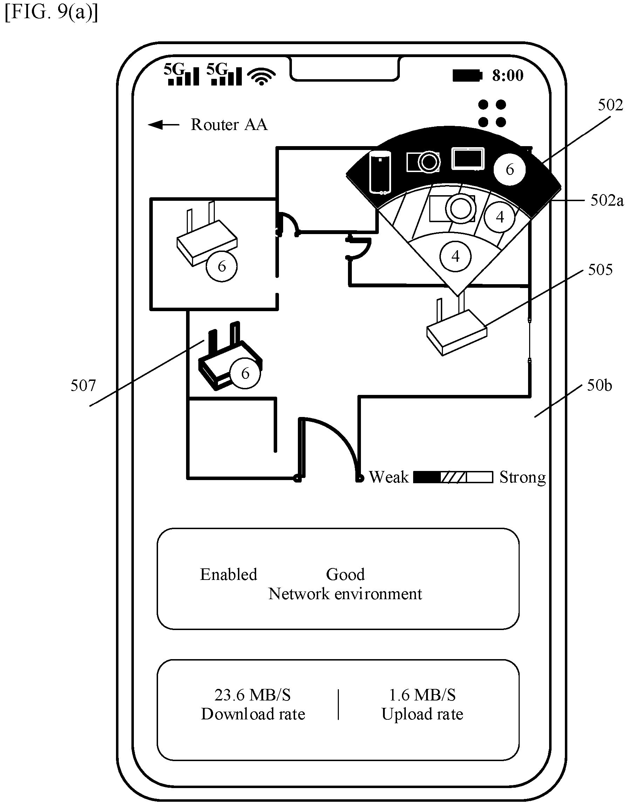

In a possible design, the first electronic device may display the identifier of the target access point based on a preset UI effect. For example, as shown in FIG. 9(a), it is detected that the user presses the identifier of the leftmost purifier in the recommendation partition 502a (represented by black filling) of a device status card 502, and the mobile phone may determine that a router that can provide optimal communication quality for the purifier in the whole house is the child router 507. The mobile phone may display an identifier of the child router 507 by using a specific UI effect (for example, a blinking effect), to prompt the user that the child router 507 is an optimal router corresponding to the purifier. The user may accordingly drag the identifier of the purifier to collide with the identifier of the child router 507, to trigger the purifier to switch from the currently connected child router 505 to the child router 507. In this way, the purifier can switch to the corresponding optimal router. This helps improve communication quality of the purifier.

In a possible design, the method further includes:
receiving information about the target access point from a primary access point.

In a possible design, the method further includes:
obtaining optimal access points, at different geographical locations, that are associated with a second target electronic device;
displaying a third interface, where the third interface includes a storage control; and
in response to an operation of the user on the storage control, sending information about the optimal access points associated with the geographical locations to the second target electronic device, so that the second target electronic device stores the information about the optimal access points associated with the geographical locations.

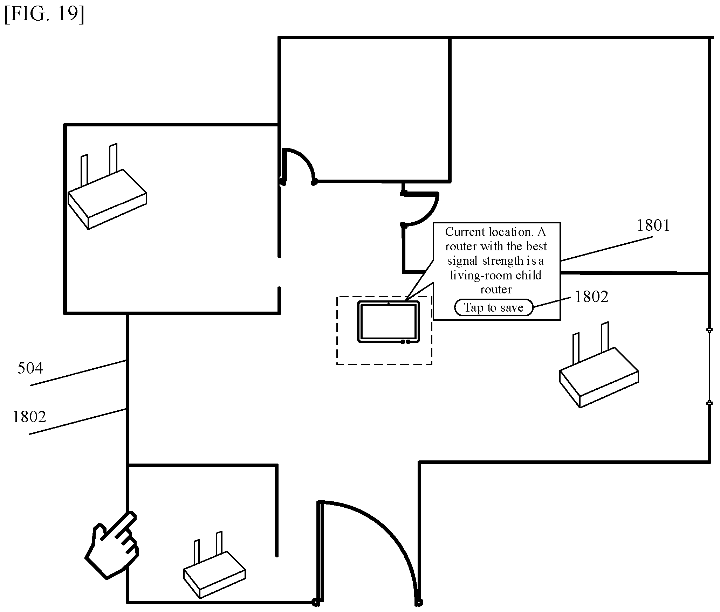

The user may hold a tablet (an example of the second target electronic device) to move in the whole house, and the mobile phone may obtain a location of the tablet in the whole house. As shown in FIG. 19, the mobile phone may display an interface 1802 (an example of the third interface), the interface 1802 includes a floor plan 504, and an identifier of a tablet is displayed at a corresponding location in the floor plan 504. The mobile phone may further display a prompt box 1801, where the prompt box 1801 indicates an optimal router that can be connected to the tablet at a corresponding location in the whole house. For example, as shown in FIG. 19, when the location of the tablet in the whole house is shown in a dashed-line box, a router that can provide optimal communication quality for the tablet in the whole house is a living-room child router.

As shown in FIG. 19, the user may tap a "tap to save" button (an example of the storage control).

In response to the operation of the user, the mobile phone may establish an association relationship between the location of the tablet and the optimal router (namely, the living-room child router) that can be connected to the tablet at the location, and send, to the tablet, information about an optimal access point associated with a corresponding geographical location. The tablet stores the information about the optimal access point associated with the corresponding geographical location.

In this way, when the tablet moves to the corresponding location in the whole house again subsequently, the tablet may determine, based on the foregoing association relationship, the optimal child router associated with the location, and automatically switch to the optimal child router based on stored network connection information of the optimal child router, thereby reducing a switching delay.

In a possible design, before the obtaining a geographical location of a second target electronic device, the method further includes:
displaying a fourth interface, where the fourth interface includes an identifier of at least one third electronic device, and the at least one third electronic device includes the second target electronic device; and
receiving an operation of the user on an identifier of the second target electronic device in a second interface, and starting measurement of an optimal access point corresponding to a geographical location of the second target electronic device.

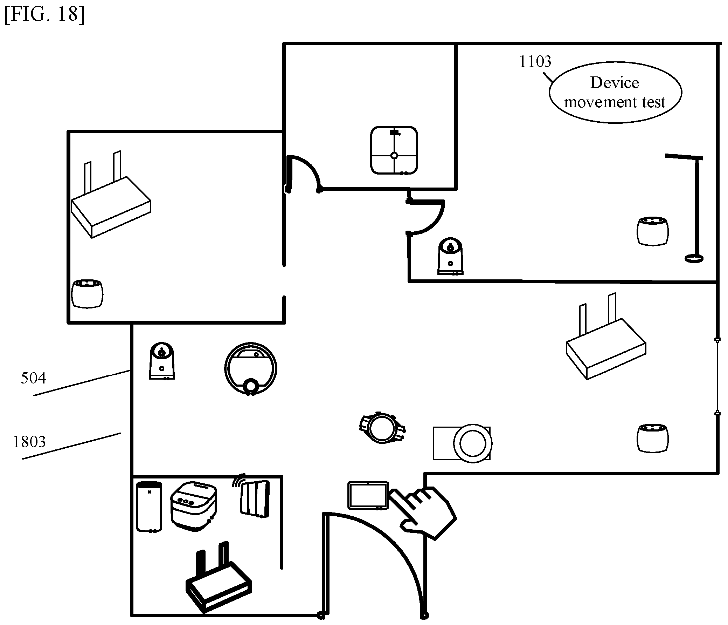

For example, as shown in FIG. 18, the mobile phone displays an interface 1803 (an example of the fourth interface), and the interface 1803 includes the identifier (a tablet, a sound box, or the like) of the at least one third electronic device. An operation of the user on the identifier of the tablet in the interface 1803 is detected, and measurement on an optimal access point corresponding to a geographical location of the tablet is started.

According to a second aspect, this application provides a device switching apparatus, applied to a first electronic device or a chip system, where the apparatus includes:
a display module, configured to display a first interface, where the first interface includes an identifier of at least one second electronic device;
an input module, configured to receive an operation of a user on an identifier of a first target device in the at least one second electronic device; and
a communication module, configured to send a switching request in response to the operation, where the switching request is used to request to switch the first target device from a source access point to which the first target device is currently connected to a target access point.

In a possible design, the first interface includes a first display component, the first display component includes a first partition, and the first partition includes an identifier of an electronic device that is connected to the source access point and whose communication quality is within a first range; and/or the first partition includes an identifier of an electronic device that is not connected to the source access point, whose signal can be detected by the source access point, and whose communication quality is within the first range, where the first partition includes the identifier of the at least one second electronic device.

In a possible design, the first partition includes an identifier of an electronic device whose communication quality is within a first range within a specified space range.

In a possible design, the first interface further includes a second partition, and communication quality of an electronic device in the first partition is lower than communication quality of an electronic device in the second partition.

In a possible design, a user interface UI effect of the first partition is different from a UI effect of the second partition.

In a possible design, the method further includes:
the input module is further configured to receive a view indication of the user for the electronic device whose communication quality is within the first range, where
the display module is further configured to display a second display component in response to the view indication, where the second display component includes a third partition corresponding to the first partition, and the third partition includes the identifier of the at least one second electronic device and an identifier of at least one other electronic device whose communication quality is within the first range.

In a possible design, the method further includes:
The input module is further configured to: receive a view operation of the user on an electronic device whose communication quality is within the first range or a second range; and
in response to the view operation of the user, display, in the corresponding first partition or second partition, a hidden identifier of the electronic device whose communication quality is within the first range or the second range.

In a possible design, the first interface further includes an identifier of at least one access point, and the at least one access point includes the target access point; and
that the input module is configured to receive an operation of a user on an identifier of a first target device in the at least one second electronic device includes:
The input module is configured to receive an operation of dragging, by the user, the identifier of the first target device to a target region, where the target region is a region in which the identifier of the target access point is located.

In a possible design, the receiving an operation of dragging, by the user, the identifier of the first target device to a target region includes: receiving an operation of dragging the identifier of the first target device to a location of the identifier of the target access point to present a collision effect.

In a possible design, the method further includes:
The display module is further configured to display a notification message, where the notification message is used to prompt that current communication quality of the first target device is poor; and
the displaying a first interface includes: displaying the first interface in response to an operation of the user on the notification message.

In a possible design, the sending a switching request includes: sending a switching request to a decision access point, where the decision access point is a source access point, or a target access point, or an access point other than the source access point and the target access point.

According to a third aspect, a technical solution of this application provides an electronic device, including an input device, a display, one or more processors, a memory, and one or more computer programs. The processor is coupled to the input device, the processor, and the memory, the one or more computer programs are stored in the memory, and when the electronic device runs, the processor executes the one or more computer programs stored in the memory, so that the electronic device performs the method in any design of any one of the foregoing aspects.

According to a fourth aspect, this application provides a terminal, where the terminal includes a processor and a memory, the memory is configured to store computer program code, the computer program code includes computer instructions, and when the processor executes the computer instructions, the terminal is enabled to perform the method in any possible design of any one of the foregoing aspects of this application.

According to a fifth aspect, a technical solution of this application provides a computer-readable storage medium, including computer instructions. When the computer instructions are run on an electronic device, the electronic device is enabled to perform the method in any possible design of any one of the foregoing aspects.

According to a sixth aspect, a technical solution of this application provides a computer program product. When the computer program product runs on an electronic device, the electronic device is enabled to perform the method in any possible design of any one of the foregoing aspects.

### BRIEF DESCRIPTION OF DRAWINGS

FIG. 1 is a diagram of an access point switching scenario according to an embodiment of this application;
FIG. 2 is a diagram of an architecture of a system according to an embodiment of this application;
FIG. 3 is a diagram of a structure of an electronic device according to an embodiment of this application;
FIG. 4 is a diagram of a software architecture of an electronic device according to an embodiment of this application;
FIG. 5(a) and FIG. 5(b), FIG. 6A(a) and FIG. 6A(b), and FIG. 6B are diagrams of interfaces according to an embodiment of this application;
FIG. 7A and FIG. 7B are a schematic flowchart of a device access switching method according to an embodiment of this application;
FIG. 8 is a diagram of a signal strength indication according to an embodiment of this application;
FIG. 9(a) and FIG. 9(b), FIG. 10A(a) and FIG. 10A(b), FIG. 10B(a) and FIG. 10B(b), FIG. 11A, and FIG. 11B are diagrams of interfaces according to an embodiment of this application;
FIG. 12A, FIG. 12B, and FIG. 13 are diagrams of interfaces according to an embodiment of this application;
FIG. 14 is a schematic flowchart of a device access switching method according to an embodiment of this application;
FIG. 15(a) and FIG. 15(b) are a diagram of an interface according to an embodiment of this application;
FIG. 16 is a schematic flowchart of a device access switching method according to an embodiment of this application;
FIG. 17 is a diagram of a scenario according to an embodiment of this application;
FIG. 18 to FIG. 20 are diagrams of interfaces according to an embodiment of this application;
FIG. 21 is a diagram of a structure of an access switching apparatus according to an embodiment of this application; and
FIG. 22 is a diagram of a structure of a chip system according to an embodiment of this application.

### DESCRIPTION OF EMBODIMENTS

Terms used in the following embodiments are merely intended to describe specific embodiments, but are not intended to limit this application. The terms "one", "a", "the", "the foregoing", "this", and "this one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

First, technical terms used in embodiments of this application are described.

### 1. Wireless roaming

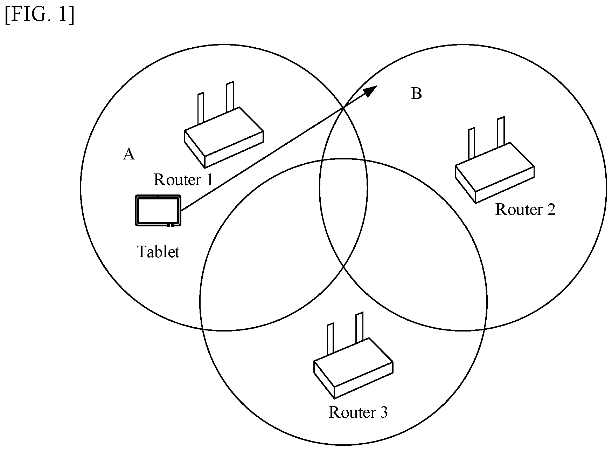

When there are a plurality of access points (access points, APs) with a same service set identifier (service set identifier, SSID) ein a network, a user may move in a coverage region of the access point. As the user moves, a device held by the user needs to switch between different access points. This scenario is referred to as a wireless roaming scenario. FIG. 1 shows an example roaming scenario. A tablet is initially located in a coverage region A of a router 1, and the tablet implements a network access function through the router 1. Then, a user holds the tablet and moves to a coverage region B of a router 2, and the tablet performs a switching process to switch to the router 2. In this way, in the region B, the tablet may implement the network access function through the router 2.

### 2. 802.11k protocol

Generally, in a conventional roaming solution, a device needs to periodically switch to another channel, and send a broadcast frame on the another channel to detect a surrounding access point operating on a different channel. In this solution, overheads of detecting the access point by the device are high. Compared with the conventional solution, for a device that supports the 802.11k protocol, the device may probe a corresponding access point only on a specified channel, and the access point sends a neighbor list of the device to the device. The neighbor list may include information like an address of an access point around the device and an operating channel of a corresponding access point, and the device may perform wireless roaming based on the neighbor list. In this way, the device does not need to switch a plurality of channels to detect the access point on the different channel, thereby improving roaming efficiency.

### 3. 802.11v protocol

In some conventional roaming solutions, roaming may be triggered based on a roaming threshold of a device. Generally, different devices have different roaming thresholds. When a signal strength of a new access point is higher than that of a current access point, but the signal strength of the new access point does not reach the roaming threshold of the device, the device is still connected to an original access point. As a result, the device cannot be connected to the access point with a better signal. Compared with a conventional roaming solution, for a device that supports the 802.11v protocol, an access point may send a trigger message to the device based on a signal strength, channel load, and the like of the device, to trigger the device to perform scanning and report measurement information. The access point may recommend and guide, based on the measurement information reported by the device, the device to roam. In this way, the device can be connected to an access point with a better signal.

### 4. 802.11r protocol

A device in which the 802.11r protocol is enabled can reduce authentication time during roaming. Specifically, the device in which the protocol is enabled may perform security authentication with a new access point before a switching process is completed, to reduce authentication time during wireless access, thereby quickly implementing switching.

Currently, regardless of whether a device supports the 802.11k/v/r protocol, the device may be accidentally switched to another access point in a network access process. **In** the switching process, the device may temporarily lags and be disconnected, affecting network access experience of a user. For example, when the user uses a sound box to listen to music on the network, the sound box may be switched to another router due to a network environment change. As a result, the sound box is disconnected for short time, affecting music listening experience of the user.

To resolve the foregoing technical problem, an embodiment of this application provides a device access switching method. The method is applicable to a switching system including a plurality of access points. The switching system may be used in a possible multi-access-point networking scenario like a home scenario or a shopping mall scenario. A network architecture of the switching system may be but is not limited to a mesh (Mesh) network or a tree network. An example in which a networking scenario is the home scenario is used. FIG. 2 shows an example architecture of a switching system to which an embodiment of this application is applicable. As shown in FIG. 2, a home may be used as a unit for networking. The home may also be referred to as a whole house, and the whole house may be divided into different pieces of space. For example, the whole house includes a drop aisle, a kitchen, a dining room, a living room, a balcony, a primary bedroom, a secondary bedroom, a toilet, and the like.

A whole-house switching system may include an access point 100 (for example, a router). The access point 100 is configured to: connect to a local area network or the Internet, and select and set a path for sending a signal by using a specific protocol.

For example, a plurality of routers may be deployed in the whole house. The plurality of routers include a primary router and a secondary router. The primary router may be a router in the home or a router connected to an external network. For example, in a fiber-to-the-home scenario, the primary router may be a router connected to an optical modem. Alternatively, a function of the primary router and a function of the optical modem are integrated in a same device.

The primary router may be connected to one or more secondary routers. The secondary router may be connected to the primary router or another secondary router. The primary router has a control and management function. For example, a Wi-Fi password may be configured, and a Wi-Fi parameter may be set. In embodiments of this application, the primary router may run a decision algorithm, to determine a network switching policy for a device, and control the device to switch from a currently connected router to another router with a better signal.

The secondary router may be connected to one or more terminal devices, so that the terminals can access a network to implement a network access function. In a possible implementation, the secondary router may operate in a bridge mode, and has a forwarding and transparent transmission function.

In some embodiments, for a specific router, the router may measure a communication quality score of an online device. The communication quality score may represent communication quality of the device. For example, the router may measure a communication quality score of a device connected to the router. The router may further measure a communication quality score of a device that is not connected to the router.

In addition to a primary/secondary networking architecture, the plurality of routers may alternatively use a mother/child networking architecture. For example, in a domain combination or power line communication (power line communication, PLC) scenario, the plurality of routers may include a mother router and a child router. The mother router runs a decision algorithm, and is configured to: determine a switching policy for a device, and control the device to switch from a currently connected router to a router with a better signal.

Alternatively, the plurality of routers in the system may use a non-cascaded architecture. In the system of this architecture, the router configured to determine the switching policy may be any one or more routers in the system, and each router may perform corresponding switching through decision-making or negotiation based on a preset policy.

The whole-house switching system may further include an electronic device 200. The electronic device 200 may be a device that does not support the 802.11k/v protocol. Alternatively, the electronic device 200 may be a device that supports the 802.11k/v protocol. The electronic device 200 may be connected to a specific router in the whole house. In some cases, a current router to which the electronic device 200 is connected cannot meet a network access requirement of the electronic device 200. For example, a signal of the current router is weak. In this case, the user may control, through a network setting interface on the electronic device 300, the electronic device 200 to switch from the current router to another router with a better signal.

The whole-house switching system may include an electronic device 300. The electronic device 300 may be a device that supports the 802.11k/v protocol and in which the 802.11k/v protocol is enabled. In some examples, an application used to control the electronic device 300 or the electronic device 200 to switch an access point may be installed on the electronic device 300. The application may be a system-pre-installed application or a non-pre-installed application (for example, an application downloaded from an application store). Optionally, the system-pre-installed application may include a part of a system application (for example, a service, a component, or a plug-in in a system application), or an independent application pre-installed in the electronic device 300, for example, an AI life application.

The foregoing content is merely an example of the system to which the technical solutions in embodiments of this application are applicable. The system may further include more or fewer devices, or there may be different device layout locations. Specific forms of the access point 100, the electronic device 200, and the electronic device 300 are not limited in this embodiment of this application.

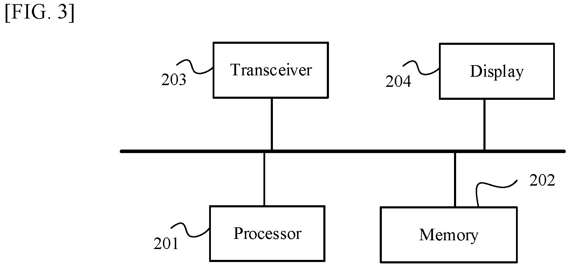

For example, FIG. 3 is a diagram of a structure of an electronic device. FIG. 3 is a diagram of a hardware structure of an electronic device according to an embodiment of this application. The electronic device includes at least one processor 201, a memory 202, a display 204, and at least one transceiver 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The foregoing components may include a communication line, configured to transmit information between the foregoing components.

The transceiver 203 is configured to communicate with another device. In embodiments of this application, the transceiver may be a module, a circuit, a bus, an interface, or another apparatus that can implement a communication function, and is configured to communicate with the another device. Optionally, the transceiver may be a transmitter that is independently disposed, and the transmitter may be configured to send information to the another device; or the transceiver may be a receiver that is independently disposed, and is configured to receive information from the another device. Alternatively, the transceiver may be a component that integrates functions of sending and receiving information. Specific implementation of the transceiver is not limited in embodiments of this application.

The memory 202 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can carry or store expected program code in a form of an instruction or a data structure and that can be accessed by a computer, but is not limited thereto. The memory may independently exist and may be connected to the processor through a communication line. The memory may alternatively be integrated with the processor.

The memory 202 is configured to store computer-executable instructions for implementing the solutions of this application, and the processor 201 controls the execution. The processor 201 is configured to execute the computer-executable instructions stored in the memory 202, to implement methods provided in the following embodiments of this application.

Optionally, the computer-executable instructions in embodiments of this application may also be referred to as application program code, instructions, computer programs, or another name. This is not specifically limited in embodiments of this application.

In a specific implementation, in an embodiment, the processor 201 may include one or more CPUs. In a specific implementation, in an embodiment, the electronic device may include a plurality of processors. Each of the processors may be a single-core (single-CPU) processor, or may be a multicore (multi-CPU) processor. The processor herein may be one or more devices, circuits, and/or processing cores configured to process data (for example, computer program instructions).

The display 204 is configured to display a network setting interface, and the user may control the electronic device through the network setting interface, to control the electronic device or another electronic device to switch to an access point with a better network signal.

A software system of the electronic device 300 may use a layered architecture, an event-driven architecture, a microkernel architecture, a microservice architecture, or a cloud architecture. In this embodiment of this application, an Android^{®} system with a layered architecture is used as an example to illustrate the software structure of the electronic device 300.

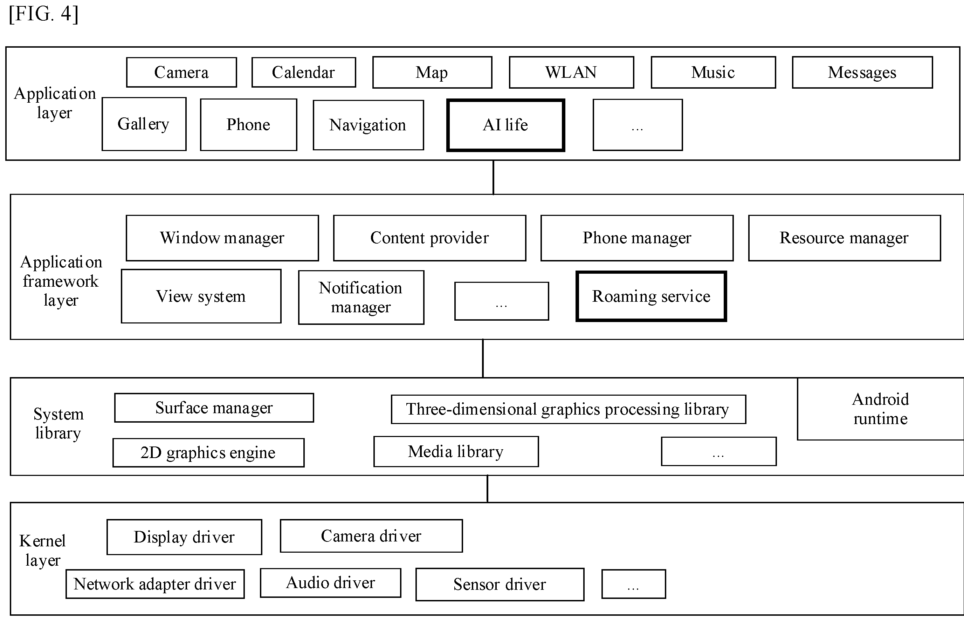

FIG. 4 is a block diagram of a possible software structure of the electronic device 300 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of applications.

As shown in FIG. 4, the applications may include applications (application, APP) such as Phone, Memo, Browser, Contacts, Camera, Gallery, Calendar, Map, Bluetooth, Music, Video, and Messages.

In some embodiments of this application, the applications may further include an application related to access point switching by a control device. Optionally, the application used by the control device to perform access point switching may be pre-installed when the electronic device 300 is delivered from a factory, or may be downloaded and installed from an application store when the user uses the electronic device 300. This is not limited in embodiments of this application. For example, in embodiments of this application, the application used by the control device to perform switching includes but is not limited to an AI life application. The AI life application may provide a network setting interface, and the user may control, through the network setting interface, a current device with a weak signal to switch to another access point, to improve network access experience of using the device by the user.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes a visual control, for example, a control for displaying a text and a control for displaying an image. The view system may be configured to construct an application. A display interface may include one or more views.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the display in a form of a dialog window. For example, text information is prompted in the status bar, an alert tone is made, the electronic device vibrates, or an indicator light blinks.

In embodiments of this application, the framework layer may include a switching service. The AI life application may invoke the switching service, to send information about a related operation of the user on the network setting interface to a primary router. The primary router controls, based on the information about the operation of the user, a target device to be switched from a source router to a target router. For example, the camera is currently connected to a primary-bedroom router, and it is detected that the user drags a camera identifier on the network setting interface to a coverage region of a living-room router. In this case, the AI life application may send information about the operation of the user to the primary router. The primary router may control, based on the information about the operation of the user, the camera to switch from the currently connected primary-bedroom router to the living-room router.

It may be understood that FIG. 4 is merely an example of the software architecture to which the electronic device 300 is applicable. In an actual implementation, some modules or functions of a layer may be alternatively implemented by one or more other layers. For example, the switching service may be implemented by the kernel layer, or a plurality of layers jointly implement some functions of the switching service.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on a virtual machine. The virtual machine executes Java files of the application layer and the application framework layer as binary files. The virtual machine is configured to implement functions such as object lifecycle management, stack management, thread management, security and exception management, and garbage collection.

The kernel layer is a layer between hardware and software. The kernel layer includes at least a display driver, a camera driver, an audio driver, a sensor driver, and the like. This is not limited in embodiments of this application.

The following describes in detail the technical solutions in embodiments of this application by using an example in which a mobile phone is the electronic device 300.

For example, an application used by a control device to perform access point switching is an AI life application, and a networking manner of a router is mother/child routing networking. In response to an operation of starting the AI life application by a user, the mobile phone may display an interface 50a shown in FIG. 5(a). The interface 50a may include cards of electronic devices at home. A card of a mother router AA is marked as 501. If it is detected that the user taps the card 501 of the mother router AA, the mobile phone may jump to an interface 50b shown in FIG. 5(b). In some examples, a floor plan 504 of a whole house may be displayed in the interface 50b.

The mobile phone can display a network coverage of the whole house in a visualized manner through the floor plan. In some examples, the mobile phone may display, on the floor plan 504, identifiers of all deployed routers. For example, as shown in FIG. 5(b), the mobile phone displays an identifier of a child router 505, an identifier of a drop mother router 506, and an identifier of a child router 507 on the floor plan 504. The identifier may be, for example, a text identifier, or a graphic visualized identifier. The user may perform, by operating an identifier of a corresponding router, access adjustment on, for example, a terminal device connected to the router. For example, as shown in FIG. 5(b), the user may tap the identifier of the child router 505, and in response to the tapping operation, the mobile phone may display a device status card 502 (an example of a first display component).

The device status card 502 may include identifiers of one or more devices connected to the child router 505. For example, it is assumed that the devices connected to the child router 505 include a purifier, a projector, a tablet, and a smart switch, as shown in FIG. 5(b), identifiers of the purifier, the projector, the tablet, and the smart switch may be presented in the device status card 502. Optionally, a device identifier may be an icon, a text, or the like. A specific presentation manner of the device identifier is not limited in embodiments of this application.

In some embodiments, each device connected to the child router 505 may have a corresponding communication quality score. The mobile phone may present, in the device status card 502 corresponding to the child router 505 based on the communication quality score of each device, the identifiers of the connected devices. In a possible implementation, a communication quality score of a device connected to the child router 505 may be determined based on parameters such as a signal strength of the device, a throughput, and a load quantity of the child router 505. In some examples, a stronger signal strength of a device connected to the child router 505, a larger throughput of the device, and a lower load quantity of the child router 505 indicate higher communication quality of the device, that is, a higher communication quality score of the device. In some embodiments, the mobile phone may divide communication quality score intervals, and for two devices whose communication quality scores are in different communication quality score intervals, identifiers of the two devices are displayed differently through different display effects. For example, as shown in FIG. 5(b), the mobile phone displays the device status card 502. Optionally, the device status card 502 may include a partition 502a, a partition 502b, and a partition 502c. The partition 502a corresponds to a first score interval, and communication quality scores of devices such as the purifier, the projector, and the tablet presented in the partition 502a are within the first score interval. It is assumed that communication quality corresponding to the first score interval is poor. Correspondingly, communication quality of the devices such as the purifier, the projector, and the tablet is poor. Optionally, the mobile phone may mark the partition 502a by using a first color. Optionally, to remind the user of a device with poor communication quality, the mobile phone may display the partition 502a or the device identifier in the partition 502a through a special display effect like blinking.

The partition 502b corresponds to a second score interval, and communication quality scores of devices such as the smart switch presented in the partition 502b are within the second score interval. It is assumed that communication quality corresponding to the second score interval is medium. In this case, communication quality of the smart switch is medium. Optionally, the mobile phone may mark the partition 502b by using a second color.

The partition 502c corresponds to a third score interval, and communication quality corresponding to the third score interval is high. Optionally, the mobile phone may mark the partition 502c by using a third color.

The foregoing communication quality score intervals may be flexibly determined based on an actual scenario. A specific calculation manner of the communication quality score intervals is not limited in embodiments of this application.

Optionally, the mobile phone may present, in the device status card 502 corresponding to the child router 505, a quantity of devices connected to the child router 505. Optionally, the mobile phone may present, in the device status card 502 based on communication quality of the devices, quantities of devices with different communication quality. For example, as shown in FIG. 5(b), a quantity (6) of devices with poor communication quality (a communication quality score of the communication quality is within the first score interval) is presented in the partition 502a, a quantity (4) of devices with medium communication quality (a communication quality score of the communication quality is within the second score interval) is presented in the partition 502b, and a quantity (4) of devices with good communication quality (a communication quality score of the communication quality is within the third score interval) is presented in the partition 502c.

Optionally, as shown in FIG. 5(b), the interface 50b may further include a communication quality indication identifier 503. The communication quality indication identifier 503 may indicate a relationship between communication quality and a display region. In FIG. 5(b), an identifier of a device with poor communication quality is displayed in the partition 502a (represented by black filling). An identifier of a device with medium communication quality is displayed in the partition 502b (represented by slash filling). An identifier of a device with high communication quality is displayed in the partition 502c.

In some embodiments, as shown in FIG. 6A(a), the user may touch an identifier of the leftmost purifier in the partition 502a, and drag the identifier of the purifier along a direction like an arrow direction towards the identifier of the child router 507. As shown in FIG. 6A(b), if it is detected that the identifier of the purifier is moved to a region in which the identifier of the child router 507 is located, or if it is detected that the identifier of the purifier collides with the identifier of the child router 507, the mobile phone may determine that the user wants to switch the purifier from the currently connected child router 505 to the child router 507 (namely, a target router). The mobile phone may send a switching request to the mother router 506 through the AI life application. The switching request may carry information about the target router (information about the child router 507), and the switching request may be used to request to switch to the child router 507. After receiving the switching request, the mother router 506 may control, based on the information about the child router 507 to which the purifier wants to switch and information about the child router 505 to which the purifier is currently connected, the purifier to switch from the currently connected child router 505 to the child router 507.

The foregoing mainly uses an example in which the user drags the identifier of the target device to the region in which the identifier of the target router is located, to trigger the target device to perform router switching. In some other embodiments, the user may alternatively trigger the foregoing switching process in another operation manner. For example, as shown in FIG. 6B, the user may double-tap the identifier of the purifier in a recommendation partition 502a, to trigger the mobile phone to send the switching request to the mother router, and the mother router controls the purifier to switch from the currently connected router to the target router with better signal quality. Alternatively, the user may touch and hold the identifier of the purifier to trigger pop-up window display to indicate the user to perform router switching.

The foregoing mainly uses an example in which communication quality is divided into three types and identifiers of devices of corresponding communication quality are displayed in the three partitions. It should be understood that, based on the technical solutions in embodiments of this application, more or fewer types of communication quality may be divided, and display partitions corresponding to various types of communication quality may be divided. A specific communication quality division manner, a display partition division manner, a display presentation manner, and the like are not limited in embodiments of this application.

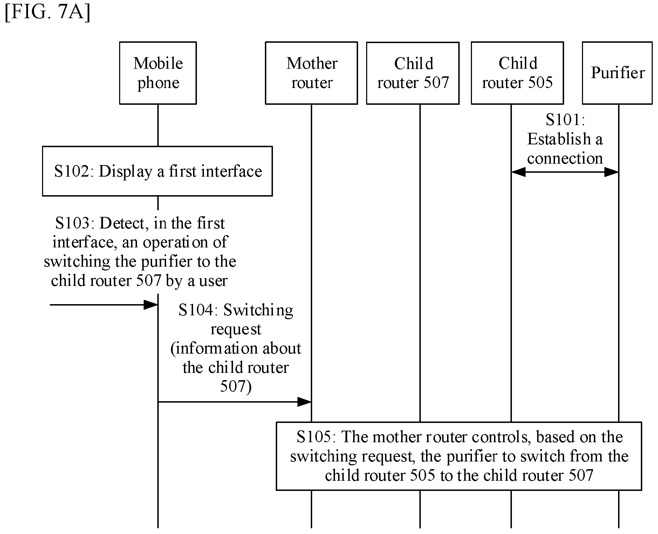

FIG. 7A shows an example procedure of a switching method according to an embodiment of this application. The method includes the following steps.

S101: Establish a connection between a purifier and a child router 505.

For a specific implementation of establishing the connection between the purifier and the child router 505, refer to the conventional technology. Details are not described herein again.

In some examples, after the child router 505 establishes the communication connection to the purifier, the child router 505 may send information about the communication connection to a mother router 506, so that the mother router 506 can learn of a topology of networking in a whole house.

S102: A mobile phone displays a first interface.

The first interface includes identifiers of a plurality of routers and identifiers of devices connected to the routers in the whole house.

For example, an interface 50b shown in FIG. 5(b) is an example of the first interface. The interface 50b includes an identifier of the drop mother router 506, an identifier of the child router 505, and an identifier of a child router 507 in the whole house.

As shown in FIG. 5(b), in response to tapping the identifier of the child router 505 by a user, the mobile phone may display a device status card 502 in the interface 50b. Identifiers of devices (for example, a purifier, a projector, a tablet, and a smart switch) connected to the child router 505 are presented in the device status card 502.

In a possible implementation, each router may obtain a communication parameter of a connected device, and calculate communication quality of the device based on the communication parameter of the device. The child router may report, to the mother router, communication quality of each device connected to the child router. In this way, the mother router can obtain communication quality of each online device in the whole house. The mother router may send the communication quality of each online device in the whole house to an AI life application on the mobile phone. The mobile phone may present an identifier of a corresponding online device in the device status card 502 based on the communication quality of each online device.

For example, as shown in FIG. 5(b), the device status card 502 may include a partition 502a, a partition 502b, and a partition 502c. The mobile phone may display an identifier of an online device in a corresponding partition based on the communication quality of each online device in the whole house. The partition 502a may also be referred to as a recommendation partition 502a.

The recommendation partition 502a may be used to present an identifier of a device with poor communication quality. The user may drag a device identifier (for example, an identifier of a leftmost purifier) in the recommendation partition 502a from the child router 505 to a region in which another router (for example, the child router 507) is located, to trigger the purifier to switch from the currently connected child router 505 to the child router 507, to improve communication quality of the purifier.

Optionally, the recommendation partition 502a may be a region that is more likely to attract user attention. For example, as shown in FIG. 5(b), the recommendation partition 502a may be located at a topmost location of the device status card 502. In this way, the user can be reminded to perform access switching on a device with poor communication quality, to switch to a target router that is more suitable for communication, so as to improve communication quality of the device.

In some embodiments, as shown in FIG. 5(b), the mobile phone may display, in the partition 502b, an identifier of a device with medium communication quality. The partition 502b may also be referred to as a maintenance partition 502b. The device presented in the maintenance partition 502b does not require additional control, and may maintain a current connection state. In some examples, if the user drags the identifier of the device that is presented in the maintenance partition 502b, the mobile phone may display a prompt box, to prompt the user that "Current communication quality of the device is good. Access point switching is not necessary.", or display a prompt box "Current communication quality of the device is good. Still need to perform access point switching?", and complete switching after the user confirms twice that the switching is required. In some embodiments, an identifier of a device with good communication quality is displayed in the partition 502c. The partition 502c may also be referred to as a reserved partition 502c. Because a connection status of the device shown in the reserved partition 502c is good, the user generally does not need to perform additional network planning.

In the foregoing solution, devices with different communication quality are displayed by partitions, so that the user can clearly distinguish between communication quality of devices in different partitions, and the user performs access switching control based on the communication quality of the devices, to improve human-machine interaction efficiency.

Optionally, different partitions in the device status card 502 may have different display effects. For example, in FIG. 5(b), the partition 502a, the partition 502b, and the partition 502c have different colors.

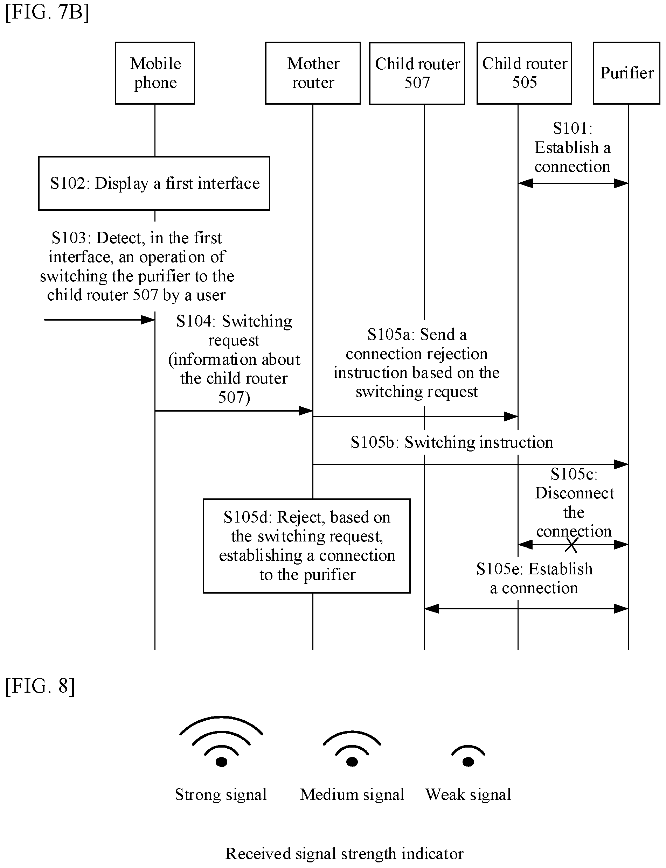

Optionally, the communication parameter of the device includes but is not limited to any one or more of the following parameters: a received signal strength indicator (received signal strength indicator, RSSI), a throughput, and a load quantity of a router connected to the device. The RSSI may represent a strength of a signal between the router and the device. For example, as shown in FIG. 8, devices may be classified into a device with a strong signal strength, a device with a medium signal strength, a device with a weak signal strength, and the like based on the RSSI. The throughput of the device may represent a traffic volume of the device. Devices may be classified into a large-traffic device, a medium-traffic device, a small-traffic device, and the like based on throughputs of the devices. The load quantity of the router is a quantity of devices connected to the router.

For example, the router configures a weight for each communication parameter, and calculates a communication quality score of a connected device based on each communication parameter and a corresponding weight, where the communications quality score represents communication quality of the device.

In FIG. 5(b), a sector-shaped device status card 502 is used as an example for description. It should be understood that the device status card may alternatively be in another shape or display effect like a circle, a square, or a list. A specific implementation and a display effect of the device status card are not limited in embodiments of this application.

S103: The mobile phone detects an operation intention of switching the purifier to the child router 507 by the user.

For example, as shown in FIG. 6A(a), the user may drag the identifier of the leftmost purifier in the recommendation partition 502a in a direction towards the child router 507. As shown in FIG. 6A(b), if it is detected that the identifier of the purifier collides with the identifier of the child router 507, the mobile phone determines that an intention of the current dragging operation of the user is to switch the purifier to the child router 507.

Optionally, the child router 507 can make communication quality (for example, an RSSI) of the purifier higher than a threshold, or the child router 507 can make communication quality of the purifier better than current communication quality of the purifier. In this way, it can be ensured that the child router 507 can provide better network access experience for the purifier, or at least it can be ensured that the purifier can normally implement a network access function.

In some examples, if the child router 507 cannot make the communication quality of the purifier higher than the threshold, and cannot make the communication quality of the purifier better than the current communication quality of the purifier, the mobile phone may consider the current dragging operation of the user as an invalid operation, and prompt the user that the switching is not performed, where the current dragging operation of the user does not trigger the purifier to switch the router; or first ask the user whether to perform router switching when the communication quality is not to be improved.

S104: The mobile phone sends a switching request to the mother router 506.

The switching request may carry information about a target router to which the purifier is to switch. The information about the target router includes but is not limited to identity information of the target router. For example, the switching request may carry an address of the child router 507 to which the purifier is to switch.

S105: The mother router controls, based on the switching request, the purifier to switch from the child router 505 to the child router 507.

In a possible implementation, as shown in FIG. 7B, S105 may be implemented as the following steps S105a to S105e.

S105a: The mother router sends a connection rejection instruction to the child router 505.

After receiving the switching request from the mobile phone, the mother router determines that the user wants to switch the purifier from the currently connected child router 505 to the child router 507. In this case, the mother router may trigger a switching process. In a possible implementation, the mother router may send a connection rejection instruction to a child router other than the target router (the child router 507) in the whole house. The connection rejection instruction instructs the corresponding child router to reject establishing a communication connection to the purifier, or instructs the corresponding router to disconnect an existing communication connection to the purifier. In this way, only the target router can establish a communication connection to the purifier in the whole house, and a router other than the target router cannot establish or maintain a communication connection to the purifier, so that a probability of successfully establishing the connection between the purifier and the target router can be increased.

S105b: The mother router sends a switching instruction to the purifier.

It may be understood that, after receiving the switching request from the mobile phone, the mother router determines that the user wants to switch the purifier from the currently connected child router 505 to the child router 507. In this case, the mother router may send the switching instruction to the purifier, so that the purifier disconnects the communication connection to the current child router 505 and attempts to establish a connection to the new child router 507.

S105c: The purifier disconnects the connection to the child router 505.

In a possible implementation, after receiving the switching instruction from the mother router, the purifier learns, based on the switching instruction, that switching to another router is required, and may disconnect the connection to the current child router 505.

S105d: The mother router rejects, based on the switching request, establishing a connection to the purifier.

In a possible implementation, after receiving the switching request from the mobile phone, the mother router determines that the user wants to switch the purifier from the currently connected child router 505 to the child router 507. In this case, the mother router rejects establishing the connection to the purifier, so that the purifier is not connected to the non-target mother router by mistake.

S105e: The purifier establishes the communication connection to the child router 507.

After disconnecting the communication connection to the child router 505, the purifier may attempt to establish a connection to a specific router in the whole house again. In a possible implementation, the purifier scans for a router that can be connected, and finds that the child router 507 can be connected, and may establish the connection to the child router 507. Subsequently, the purifier may implement the network access function through the child router 507.

FIG. 7B shows only an example of a possible manner in which the mother router controls the purifier to perform switching. It should be understood that the purifier may alternatively be controlled in another manner to perform switching. A specific switching process of the purifier is not limited in embodiments of this application. For example, the mother router may directly send a switching instruction to the purifier, where the switching instruction carries the identifier of the target router (for example, the child router 507), and the purifier disconnects the connection to the current child router 505 based on the identifier of the child router 507, and establishes the connection to the child router 507.

In some embodiments, after the purifier switches from the child router 505 to the child router 507, the mobile phone may update quantities of online devices of the child router 505 and the child router 507. For example, in FIG. 6A(b), in the partition 502a of the device status card 502 of the child router 505, the quantity of online devices is reduced from 6 to 5. The quantity of online devices connected to the child router 507 is updated from 6 to 7.

In the foregoing technical solution, through the first interface (for example, the interface 50b shown in FIG. 5(b)) presented by the mobile phone, the user can clearly and intuitively learn of communication quality of each device in the whole house. In this way, the user can control the first interface based on communication quality of a corresponding device, to control the device to complete access point switching, so as to improve network connection quality of the device, and improve network access experience of the user.

In addition, in comparison with a case in which a device is accidentally disconnected from a network in a network access process of the user, resulting in poor network access experience of the user, in the technical solution in embodiments of this application, the user actively controls the device to complete access point switching through the first interface, which means that interruption of a service of the device in a switching process can be predicted by the user. In this way, network access experience of the user is generally not affected.

In some embodiments, when detecting that the user touches an identifier of a device in the recommendation partition, the mobile phone determines that the user wants to switch a router connected to the device. The mobile phone may determine a router that can make the device have best communication quality, and prompt the user of the optimal router. For example, as shown in FIG. 9(a), it is detected that the user presses the identifier of the leftmost purifier in the recommendation partition 502a (represented by black filling) of the device status card 502, and the mobile phone may determine that a router that can provide optimal communication quality for the purifier in the whole house is the child router 507. The mobile phone may display the identifier of the child router 507 by using a specific UI effect (for example, a blinking effect), to prompt the user that the child router 507 is an optimal router corresponding to the purifier. The user may accordingly drag the identifier of the purifier to collide with the identifier of the child router 507, to trigger the purifier to switch from the currently connected child router 505 to the child router 507. In this way, the purifier can switch to the corresponding optimal router. This helps improve communication quality of the purifier.

For another example, as shown in FIG. 9(b), it is detected that the user presses the identifier of the tablet in the rightmost of the recommendation partition 502a (represented by black filling), and the mobile phone may determine that an optimal router that can provide optimal communication quality for the tablet in the whole house is the mother router 506, and display the identifier of the mother router 506 by using a specific UI effect (for example, a blinking effect). The user may accordingly drag the identifier of the purifier to collide with the identifier of the mother router 506, to trigger the purifier to switch from the currently connected child router 505 to the mother router 506.

It may be understood that an interface presentation in another manner may alternatively be designed, to prompt the user of a target router that is recommended for switching.

In the foregoing embodiment, the mobile phone may display, in each region of the device status card 502 based on communication quality of each device connected to the router, identifiers of some devices having corresponding communication quality, and may hide identifiers of some devices in the corresponding partition. For example, in FIG. 9(a), there are six devices with poor communication quality (for example, low communication quality scores). The mobile phone displays, in the recommendation partition 502a, only identifiers of three devices with poor communication quality: the purifier, the projector, and the tablet, and identifiers of remaining three devices with poor communication quality are not displayed.

In a possible implementation, the user may tap a corresponding partition, and in response to the operation of tapping the corresponding partition by the user, the mobile phone may display identifiers of all devices with communication quality corresponding to the region, so that the user views all the devices with the corresponding communication quality. For example, as shown in FIG. 9(a), if the user taps the recommendation partition 502a, the mobile phone may display an interface 1001 shown in FIG. 10A(a). The interface 1001 may include a display component 1003 (an example of a second display component). The display component 1003 may include a recommendation partition 1003a (represented by black filling), a maintenance partition 1003b (represented by slash filling), and a reserved partition 1003c. The recommendation partition shown in FIG. 10A(a) may have a larger area than the recommendation partition 502a shown in FIG. 9(a). In some examples, the mobile phone may display, in the recommendation partition 1003a, identifiers of all devices with poor communication quality, for example, identifiers of six devices: a purifier 1002, a projector, a tablet, a watch, a camera, and a smart switch. In this way, the user can view all devices with poor communication quality that are connected to the child router 505 (namely, the living-room child router), to perform access point switching management on one or more of these devices, so as to improve communication quality of the corresponding devices. Optionally, the user does not tap the maintenance partition 502b shown in FIG. 9(a), which means that the user does not need to view the device with communication quality corresponding to the maintenance partition 502b (for example, a device whose communication quality score is in a second score interval). The mobile phone may display only a quantity of devices whose communication quality scores are in the second score interval in the maintenance partition 1003b shown in FIG. 10A(a), and does not display identifiers of the specific devices. Optionally, compared with that of the maintenance partition 502b shown in FIG. 9(a), an area of the maintenance partition 1003b shown in FIG. 10A(a) may be smaller, to avoid occupying excessive screen space. Similarly, the mobile phone may display only a quantity of devices whose communication quality scores are in a third score interval in the reserved partition 1003c shown in FIG. 10A(a), and does not display identifiers of the specific devices. Optionally, compared with that of the reserved partition 502c shown in FIG. 9(a), an area of the reserved partition 1003c shown in FIG. 10A(a) may be smaller.

It may be understood that, in response to an operation of the user on the recommendation partition 502a, identifiers of all devices in the region may alternatively be presented in another visualized interface presentation manner. In a possible example, the identifiers of all the devices may be displayed in a new pop-up window in a list manner. Alternatively, partitions including the recommendation partition 502a each are designed into a sliding window form, so that an identifier of another device that is originally in a hidden location may be displayed in response to a sliding operation of the user in a corresponding partition. For example, sliding is performed in the recommendation partition 502a to view a hidden identifier of a device in the region. As shown in FIG. 10B(a), it is detected that the user enters a left sliding operation in the recommendation partition 502a, and the mobile phone may display the identifier of the watch that is originally hidden. For another example, the user may continue to slide left in the recommendation partition 502a, to view a hidden identifier of another device in the partition.

Optionally, the recommendation partition 502a may be displayed in a fixed window by default, and after a user instruction (for example, touching and holding the recommendation partition 502a) is obtained, a sliding window mode is switched to, to display an identifier of a device that is in a hidden region in response to a sliding operation of the user.

The user may drag an identifier of a device that is in a corresponding partition to trigger a switching process of the device. As shown in FIG. 10A(a), the user may press the identifier of the purifier 1002 in the recommendation partition 1003a, and drag the identifier of the purifier 1002 in a direction towards the identifier of the mother router. As shown in FIG. 10A(b), it is detected that the identifier of the purifier 1002 is moved to collide with the identifier of the mother router, and the mobile phone may send a switching request to the mother router through the AI life application. The foregoing mainly uses an example in which identifiers of devices with different communication quality are displayed in different regions on the display. In some embodiments, identifiers of devices with one or more types of communication quality may be alternatively displayed through setting. For example, it may be set that only an identifier of a device with poor communication quality is displayed.

For example, FIG. 11A shows some content in an interface of the mobile phone. The mobile phone may display a tag 1101 and a tag 1102 in the interface. In response to the user tapping the tag 1102, the mobile phone may display, on the floor plan 504, only an identifier of a device with poor communication quality (namely, a device that is recommended to switch an access point). For example, the mobile phone may display, on the floor plan 504, identifiers of the camera, the watch, the projector, the tablet, the purifier 1002, and the smart switch that are with poor quality and that are connected to the living-room child router, and an identifier of a camera 1103 that is with poor quality and that is connected to the secondary-bedroom mother router. A region in which a device with poor communication quality is located may be referred to as a recommendation partition.

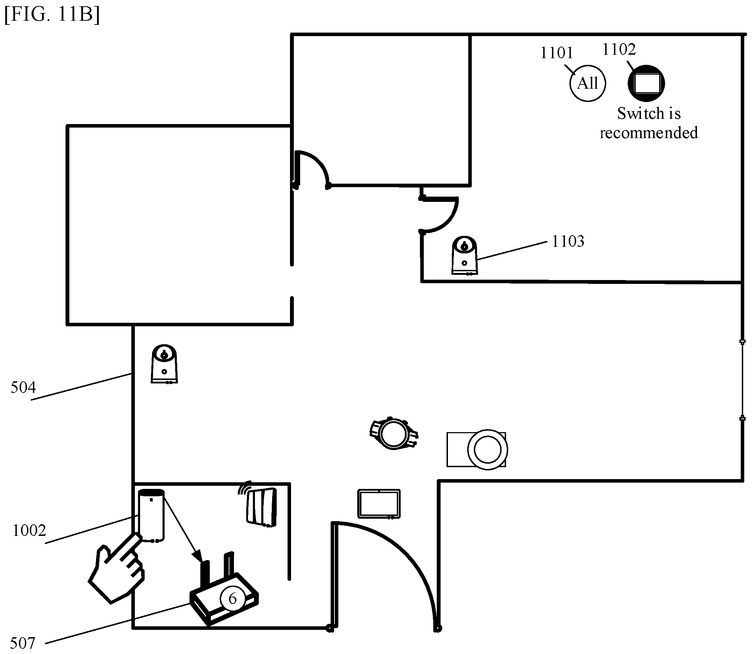

In some examples, as shown in FIG. 11B, when an operation (for example, tapping or touching and holding) performed by the user on the identifier of the purifier 1002 is detected, the mobile phone may display, in the floor plan 504, an identifier of a target router (for example, an identifier of a kitchen child router 507) to which the purifier 1002 is recommended to switch. The user may drag the identifier of the purifier 1002 to collide with the identifier of the child router 507, to trigger the mobile phone to send a switching request to the mother router (for example, the secondary-bedroom router), and the mother router controls the purifier 1002 to switch from the currently connected router (for example, the living-room child router) to the kitchen child router 507.

Optionally, when an operation (for example, tapping or touching and holding) performed by the user on the identifier of the purifier 1002 is detected, the mobile phone may display, in the floor plan 504, an identifier of the router (for example, the identifier of the living-room child router) to which the purifier 1002 is currently connected.

In some embodiments, in response to the user tapping the tag 1102 shown in FIG. 11A, the mobile phone may display, in the floor plan 504, the identifier of the device with poor communication quality (a device that is recommended to switch an access point) and the identifiers of the routers in the whole house. In response to an operation (for example, tapping or touching and holding) performed by the user on an identifier of a device, the mobile phone may present, by using a specific UI effect (for example, a blinking effect), an identifier of a target router to which the device is recommended to switch. The user may drag the identifier of the device to collide with the target router, to trigger a process of switching the device to the target router.

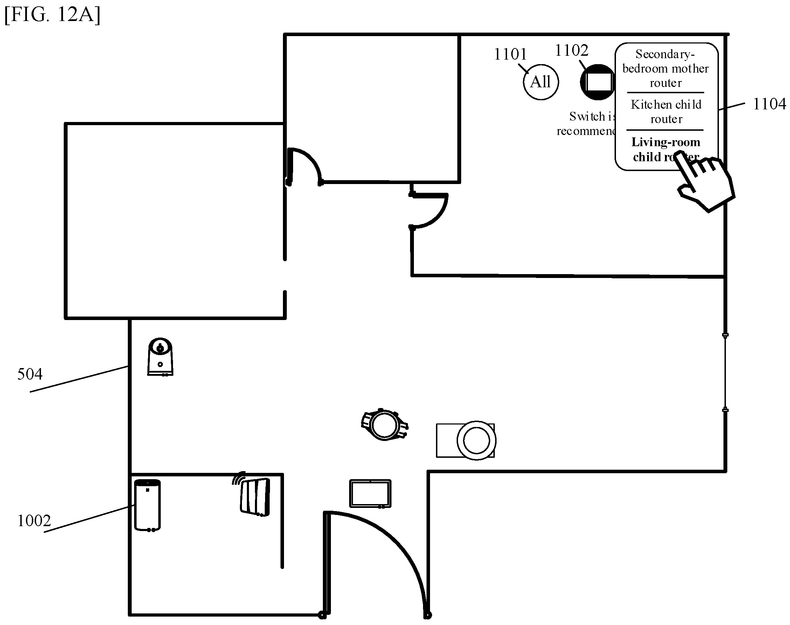

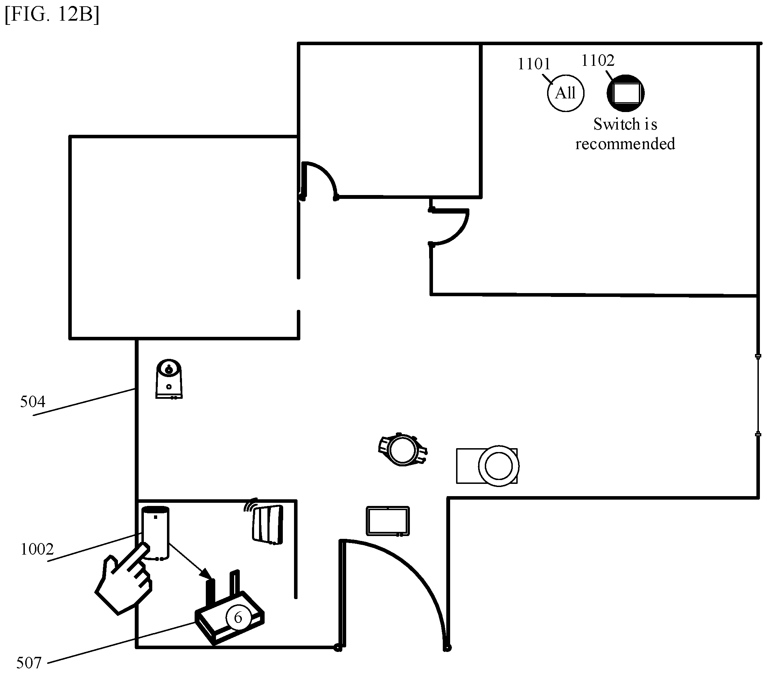

In some embodiments, the mobile phone may further display, in the floor plan, only an identifier of a device with poor communication quality that is connected to a specific router. For example, as shown in FIG. 12A, in response to an operation of touching and holding the tag 1102 by the user, the mobile phone may pop up a selection box 1104. If the user taps a "living-room child router" option, the mobile phone may display, in the floor plan 504, only an identifier of a device with poor communication quality that is connected to the living-room child router, for example, the camera, the purifier 1002, the switch, the tablet, or the watch shown in FIG. 12A. As shown in FIG. 12B, when a preset operation like tapping or touching and holding performed by the user on the identifier of the purifier 1002 is detected, the mobile phone may display, in the floor plan 504, an identifier of a target router (for example, the kitchen child router 507) to which the purifier 1002 is recommended to switch. The user may drag the identifier of the purifier 1002 to collide with the identifier of the kitchen child router 507, to trigger a switching process of the purifier 1002.

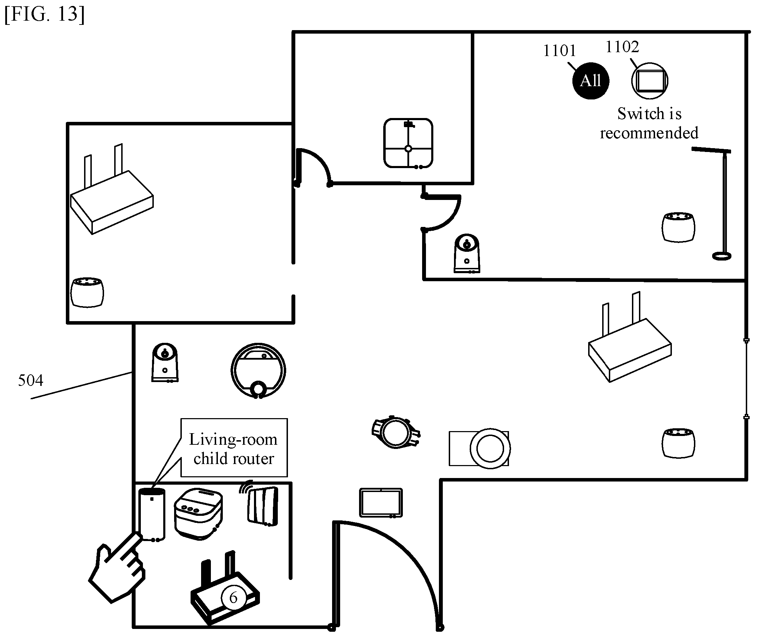

For another example, as shown in FIG. 13, in response to tapping the tag 1101 by the user, the mobile phone may display identifiers of all online devices in the whole house in the floor plan 504. These devices include devices of various communication quality, for example, a device with poor communication quality and a device with good communication quality. The user may tap an identifier of a corresponding device in the floor plan 504, to view a router to which the device is currently connected. The user may further drag an identifier of a corresponding device, to trigger the device to switch from the currently connected router to a target router.

In some embodiments, it may be further set that an identifier of a device in specific space at home is displayed in the floor plan. For example, a control may be set in an interface of the mobile phone, and the user may select, through the control, to view an identifier of a device in specific space (for example, a living room) at home. For another example, the mobile phone may detect space in which the user is currently located, and display, in an interface, an identifier of a device in the current space (for example, a living room).

The foregoing mainly uses an example in which the user actively starts the AI life application. In some other embodiments, the mobile phone may prompt the user to start the AI life application.

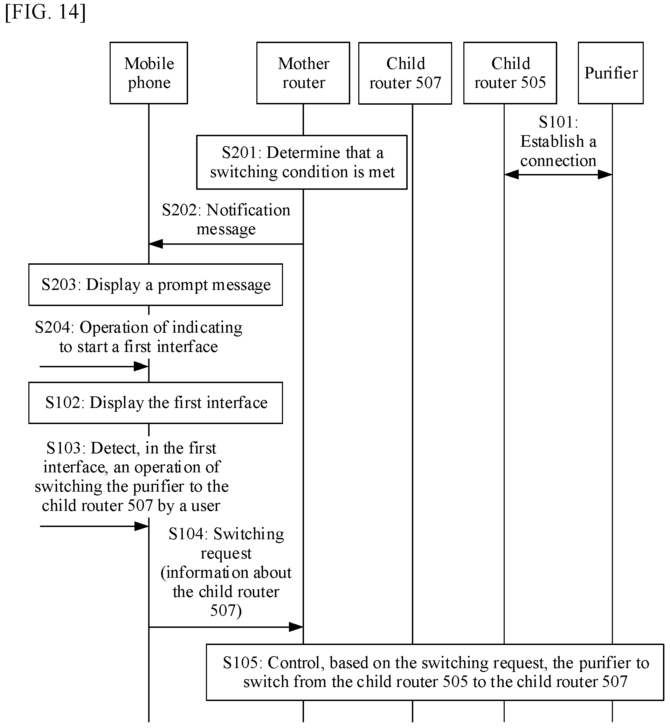

FIG. 14 shows an example of a method in which the mobile phone prompts the user to start the AI life application. As shown in FIG. 14, the method includes the following steps.

S101: Establish a connection between a purifier and a child router 505.

S201: A mother router determines that a switching condition is met.

The switching condition refers to a condition for a device to switch from a currently connected router to a target router.

Optionally, the switching condition includes but is not limited to one or more of the following conditions: Communication quality of a device connected to a router is lower than a threshold, and there is a target router that can make the communication quality of the device higher than the threshold; and there is a target router that can make communication quality of the device higher than the current communication quality.

It should be understood that the mother router may obtain communication quality of all online devices in a whole house. When communication quality of a device is lower than a threshold, and there is a target router that can improve the communication quality of the device in the whole house, the mother router determines that the condition for the device to switch to the target router is met. Alternatively, when there is a target router that can make the communication quality of the device higher in the whole house, the mother router determines that a condition for the device to switch to the target router is met.

For example, the mother router may receive a first communication quality score of the purifier from the child router 505 according to a period or another policy. The communication quality score may be determined based on one or more of the following communication parameters: an RSSI of the purifier that is measured by the child router 505, a throughput of the purifier that is measured by the child router 505, and a load quantity of the child router 505.

The mother router may further receive a second communication quality score of the purifier from a child router 507. The communication quality score is determined based on one or more of the following communication parameters: an RSSI of the purifier that is measured by the child router 507, a throughput of the purifier that is measured by the child router 507, and a load quantity of the child router 507.

In some examples, if the first communication quality score determined by the child router 505 is less than the threshold, and the second communication quality score determined by the child router 507 is greater than the threshold, it indicates that the communication quality of the purifier is poor when the purifier is connected to the current child router 505, and the child router 507 in the whole house can provide better communication quality for the purifier. In this case, the mother router determines that a condition for the purifier to switch to the child router 507 is met, and subsequently, the purifier may switch from the child router 505 to the child router 507, to improve communication quality of the purifier.

S202: The mother router sends a notification message to a mobile phone.

The notification message is used to notify of a device that meets the switching condition.

For example, if the purifier meets the switching condition, the mother router may notify the mobile phone that the device that meets the switching condition includes the purifier.

S203: The mobile phone displays a prompt message based on the notification message.

The prompt message is used to prompt to switch the router to which the device is connected. For example, as shown in FIG. 15(a), after receiving the notification message from the mother router, the mobile phone displays a prompt message 1502.

S204: The mobile phone detects an operation of indicating to start a first interface.

The operation of indicating to start the first interface may be an operation of tapping the prompt message 1502 by the user, and the first interface is used to switch the router.

S102: The mobile phone displays the first interface.

For example, in FIG. 15(a), if the mobile phone detects an operation of tapping a "switch" button by the user, the mobile phone may start the AI life application, and finally display, in a manner like automatic jumping or a user operation, a first interface 50b shown in FIG. 15(b) or a first interface 1001 shown in FIG. 10A(a), so that the user controls router switching through the first interface.

In this solution, when detecting that one or more devices meet the switching condition, the mother router can send the notification message to the mobile phone in a timely manner, so that the mobile phone can prompt the user in a timely manner to control, through the AI life application, the devices to perform access point switching.

In addition, the user may tap, based on the prompt message 1502 shown in FIG. 15(a), the "switch" button to trigger the mobile phone to directly jump to a switching control interface (for example, the interface 50b shown in FIG. 15(b)) of the AI life application. The user does not need to search for and start the AI life application in a plurality of applications in a home screen, and select and start the switching control interface in a plurality of menus in the AI life application. In this way, a user operation is simplified, and human-machine interaction efficiency is improved.

S103: The mobile phone detects an operation intention of switching the purifier to the child router 507 by the user.

S104: The mobile phone sends a switching request to the mother router 506.

S105: The mother router 506 controls, based on the switching request, the purifier to switch from the child router 505 to the child router 507.

In a possible implementation, S105 may be implemented as follows: The mother router sends, based on the switching request, a connection rejection instruction to a router (for example, the child router 505) other than the target router, and sends a switching instruction to the purifier, so that the connection between the purifier and the child router 505 is disconnected. In addition, the mother router rejects, based on the switching request, establishing a connection to the purifier. After the connection between the purifier and the child router 505 is disconnected, the purifier may attempt to establish a connection to the router other than the child router 505, for example, may establish a communication connection to the child router 507 serving as the target router.

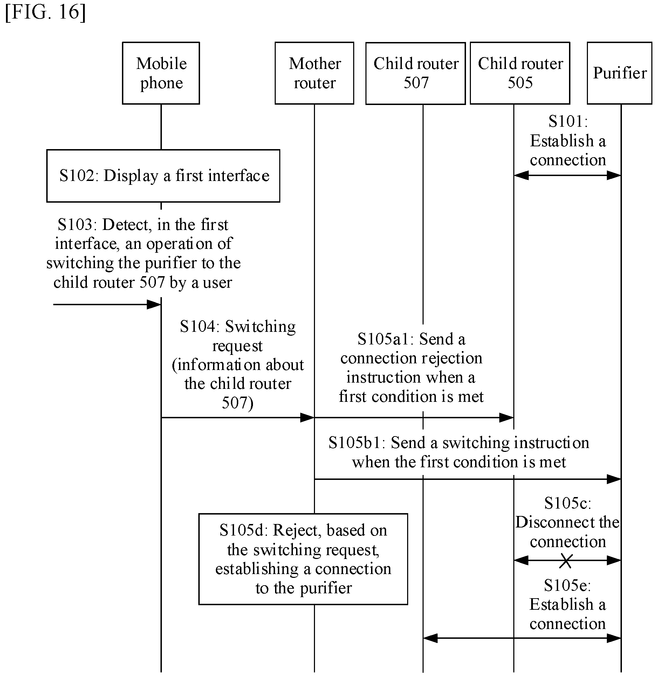

An embodiment of this application further provides a device access switching method. As shown in FIG. 16, in the method, S105a mentioned above may be implemented as follows: S105a1: The mother router sends, based on the switching request, the connection rejection instruction when a first condition is met. S105b mentioned above may be implemented as follows: S105b1: Send the switching instruction when the first condition is met. In other words, the mother router triggers a switching process and controls a corresponding to-be-switched device to perform router switching only when the first condition is met.

Optionally, the first condition may include any one of the following conditions: The device currently does not execute a network-connected service; the device completes execution of the current network-connected service; and the device completes execution of the current network-connected service, and the device does not execute another network-connected service in a first time period. The network-connected service may be a service executed by accessing a network. For example, to view current information (for example, a filter element life and indoor humidity) of the purifier through the AI life application, the network needs to be used. For another example, a service like a video, a game, and an online course needs to use the network.

Because the switching process occurs in a time period in which the to-be-switched device does not execute the network-connected service, and a current service of the to-be-switched device does not need the network, even if the to-be-switched device is temporarily disconnected from the network in a router switching process, the current service of the to-be-switched device is not affected.

For example, after receiving the switching request from the mobile phone, the mother router learns that the purifier needs to switch from the currently connected router to the target router. The mother router may determine whether the purifier is currently performing a network-connected service. If it is learned that the purifier is currently returning information like the filter element life to the mobile phone, the mother router temporarily does not send the connection rejection instruction, but may send the connection rejection instruction and the switching instruction when the purifier completes the network-connected service. In this way, the purifier can successfully send the information like the filter element life to the mobile phone, and the user can view the information like the filter element life of the water purifier through the mobile phone. This improves human-machine interaction efficiency.

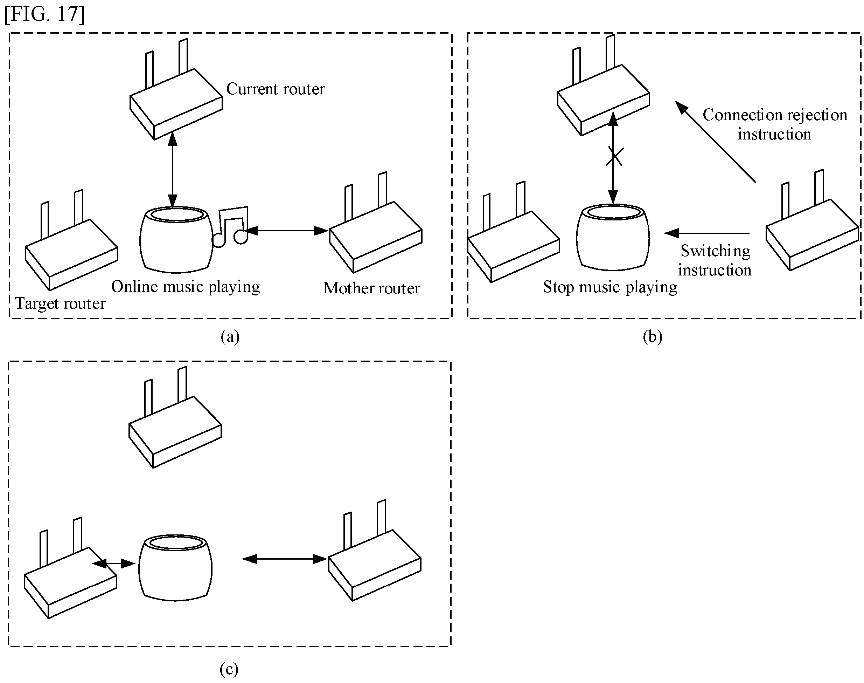

For another example, after receiving the switching request from the mobile phone, the mother router determines that a sound box needs to switch to the target router. The mother router may determine whether the sound box is currently performing a network-connected service. As shown in (a) in FIG. 17, if the sound box is currently performing the network-connected service, for example, playing music through network connection, the mother router may wait for the sound box to stop playing the music. After the sound box stops playing the music, if the network-connected service is not executed within a period of time, as shown in (b) in FIG. 17, the mother router may send a switching instruction to the sound box, and send a connection rejection instruction to a router (including a router currently connected to the sound box) other than the target router. The sound box may disconnect the connection to the current router based on the switching instruction. The router other than the target router may reject a connection to the sound box based on the connection rejection instruction. As shown in (c) in FIG. 17, after the sound box disconnects the connection, the sound box may attempt to re-establish a connection, to be connected to the target router. Optionally, because the user learns that the router needs to perform switching, the mother router may alternatively immediately send the switching instruction to the sound box after receiving the switching request from the mobile phone, without waiting for the current service to end.

The foregoing mainly uses a device like the purifier that is in a fixed location in the whole house as an example. The technical solutions in embodiments of this application are further applicable to a device that has strong mobility and is in an unfixed location, for example, a mobile phone or a wearable device that is often carried by the user and whose location changes with movement of the user. The foregoing devices with fixed locations and unfixed locations may be devices that support the 802.11k/v/r protocol, or may be devices that do not support the protocol.

An embodiment of this application further provides a device access switching method. When a user uses an AI life application, a mobile phone may prompt the user to hold a device to move in a whole house, to determine an optimal router to which the device needs to be connected at a corresponding location in the whole house.

For example, FIG. 18 shows some content in an interface of the AI life application. The mobile phone may display a tag 1103 in a floor plan 504. If the user taps the tag 1103, the mobile phone may display all devices in the whole house in the floor plan 504. The user can select a device from all the devices in the whole house as a target device. For example, as shown in FIG. 18, the user selects a tablet as the target device.

After the tablet is selected as the target device, the user may hold the tablet to move in the whole house, and the mobile phone may obtain a location of the tablet in the whole house, and display an identifier of the tablet at a corresponding location in the floor plan 504. The mobile phone may further display a prompt box 1801, where the prompt box 1801 indicates an optimal router that can be connected to the tablet at a corresponding location in the whole house. For example, as shown in FIG. 19, when a location of the tablet in the whole house is shown in a dashed-line box, the router that can provide optimal communication quality for the tablet in the whole house is a living-room child router.

As shown in FIG. 19, the user may tap a "tap to save" button, and in response to the operation of the user, the mobile phone may establish an association relationship between the location of the tablet and the optimal router (namely, the living-room child router) that can be connected to the tablet at the location.

In some examples, if the tablet is historically recommended to be connected to the living-room child router (the optimal router associated with the tablet when the tablet is at the location shown in the dashed-line box in FIG. 19) at the location, the mobile phone may directly notify the tablet of the association relationship between the location of the tablet and the optimal router. Optionally, the tablet stores network connection information of a router (including the living-room child router) that has historically been connected to the tablet. The network connection information that is of the router and that is stored in the tablet includes but is not limited to: an SSID, an address, an IP address, authentication information, a key, and the like. Subsequently, when the tablet moves to a corresponding location in the whole house again subsequently, the tablet may determine, based on the foregoing association relationship, an optimal child router associated with the location, and automatically switch to the optimal child router based on the stored network connection information of the optimal child router, thereby reducing a switching delay.

In some other examples, if the tablet has not historically been connected to the living-room child router at the location, in addition to notifying the tablet of the association relationship, the mobile phone may further indicate the tablet to establish a connection to the living-room child router. After establishing the connection to the living-room child router, the tablet may store network connection information of the living-room child router. In this way, when the tablet moves to a corresponding location in the whole house again subsequently, the tablet may determine, based on the foregoing association relationship, an optimal child router associated with the location, and automatically switch to the optimal child router based on the stored network connection information of the optimal child router, thereby reducing a switching delay.

For example, optimal routers associated with locations of the tablet in the whole house may be shown in Table 1.

**Table 1**

| Location of a tablet in a whole house | Optimal router that can be connected to the tablet in the location |
|---|---|
| Location 1 | Living-room child router |
| Location 2 | Secondary-bedroom mother router |
| Location 3 | Kitchen child router |
| ... | ... |

The foregoing uses an example in which the identifiers of the devices connected to each router may be presented in the floor plan. In some other embodiments, for a specific router, the mobile phone may further present, in the floor plan, an identifier of a device whose signal can be detected but is not connected to the router. Optionally, an identifier of a device connected to the router and an identifier of a device that is not connected to the router but whose signal can be detected may have different display effects.

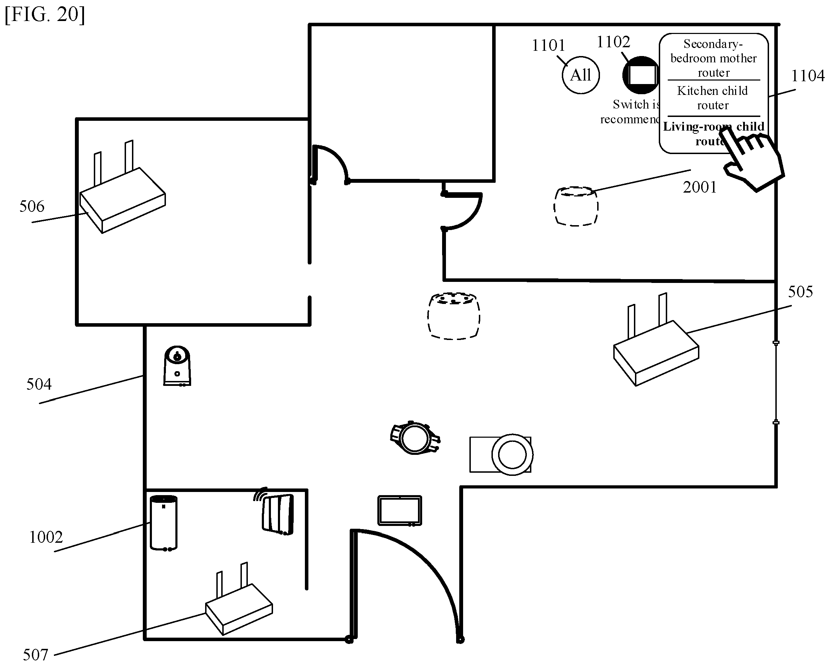

For example, as shown in FIG. 20, the mobile phone may display, in the floor plan 504, an identifier of a device connected to the living-room child router, for example, identifiers of the purifier 1002, the camera, the smart switch, the watch, the tablet, and the projector. The mobile phone may further display, in the floor plan 504, an identifier of a device that is not connected to the living-room child router but whose signal can be detected, for example, an identifier of a sound box 2001. The identifier of the sound box 2001 and the identifier of the purifier 1002 may have different display effects, so that the user can identify that the sound box 2001 is not currently connected to the living-room child router, and the purifier 1002 is currently connected to the living-room child router. The user may drag a corresponding identifier of a device in the floor plan shown in FIG. 20 to trigger a switching process of the device. For example, when it is detected that the user drags the identifier of the sound box 2001 to collide with the living-room child router 505, the mobile phone may send a switching request to the mother router (for example, the secondary-bedroom mother router 506), and the mother router controls to switch the sound box 2001 to the living-room child router 505.

The foregoing embodiments/processes may be used in combination. In some examples, after determining, in the methods in FIG. 18 and FIG. 19, the optimal routers associated with locations of the tablet in the whole house, the mother router may dynamically control, based on a real-time location of the tablet, the tablet to switch to a corresponding optimal router. For example, after the tablet is connected to a router A, the user moves with the tablet, and after the tablet moves to a new location 1, the mother router detects that a signal becomes worse, and may send a notification message to the tablet, to notify the tablet that the tablet can switch the router. After receiving the notification message, the tablet may prompt the user to switch the router. For example, the tablet may prompt, by presenting a corresponding interface, the user to switch the router. After the user agrees to switch the router, the tablet may send a switching request to the mother router, and the mother router controls the tablet to switch from the router A to an optimal router associated with the location 1.

The foregoing mainly uses a mother/child route networking manner as an example for description. In some other embodiments, the networking manner may alternatively be another manner, for example, a primary/secondary route networking manner is used, or a non-cascaded networking manner is used. For example, for a plurality of routers that are networked in a non-cascaded manner, a router that executes switching decision management among the plurality of routers may be determined based on a scenario and an architecture. The router that executes switching decision management may be a router installed with a switching decision module among the plurality of routers; or if a plurality of or all of the plurality of routers are installed with the switching decision module, the router that executes switching decision management may be determined dynamically according to a preset rule. In some other embodiments, in a scenario where the switching from a router A to a router B is required, based on a networking structure and a specific supported protocol, the switching may be implemented directly by separately notifying the router A and the router B through a switching decision router C, without performing switching logic of rejecting a connection and then reconnecting a connection described in S105a to S105e; or the switching of the router may be implemented through directly negotiating between the router A and the router B without an intermediate router.

The foregoing one or more interfaces are all examples, and there may alternatively be another interface design manner. A specific interface design manner and a manner of switching between interfaces are not limited in this application.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution order is the only order in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiments may be equivalently replaced with other possible steps. Alternatively, some steps in the method embodiments may be optional, and may be deleted in some use scenarios. Alternatively, another possible step may be added to the method embodiments. Alternatively, execution bodies (for example, a functional module) of some steps in the method embodiments may be replaced with other execution bodies.

In addition, the method embodiments may be implemented separately or in combination.

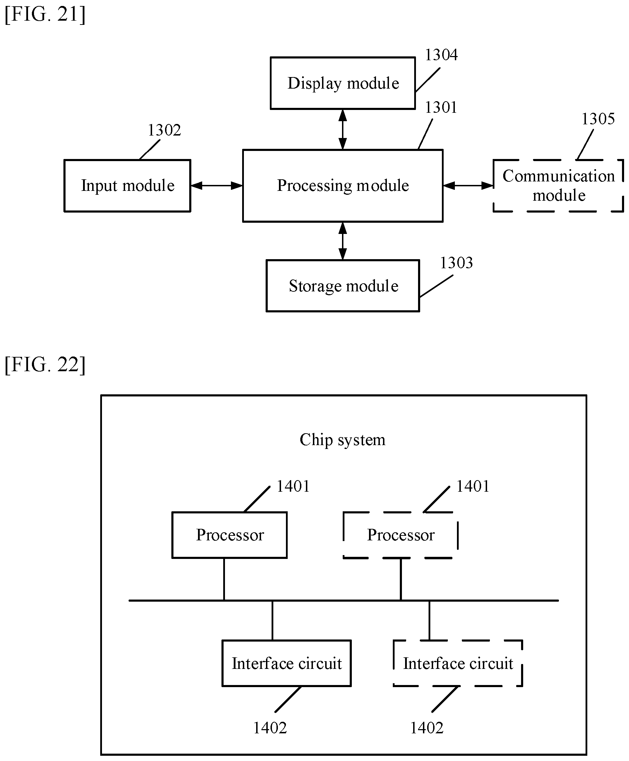

Some other embodiments of this application provide an apparatus. The apparatus may be the first electronic device, the third electronic device, or the like. The apparatus may include a display, a memory, and one or more processors. The display and the memory are coupled to the processor. The memory is configured to store computer program code, and the computer program code includes computer instructions. When the processor executes the computer instructions, the apparatus may perform functions or steps performed by the mobile phone in the foregoing method embodiments. For a structure of the apparatus, refer to the electronic device (apparatus) shown in FIG. 21.

A core structure of the apparatus may be represented as a structure shown in FIG. 21. The apparatus includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of an electronic device of a user. Specifically, the processing module 1301 may be configured to control, based on a specific trigger condition, content displayed on a primary screen. The processing module 1301 is further configured to process input instructions or data, and determine a display style based on processed data.

The input module 1302 is configured to obtain an instruction or data entered by the user, and transmit the obtained instructions or data to another module of the electronic device. Specifically, an input manner of the input module 1302 may include a touch, a gesture, proximity to the display, or the like, or may be voice input. For example, the input module may be the display of the electronic device, and may obtain an input operation of the user, generate an input signal based on the obtained input operation, and transmit the input signal to the processing module 1301.

The storage module 1303 may include a volatile memory and/or a non-volatile memory. The storage module is configured to store instructions or data related to at least one of other modules of an apparatus device of the user. Specifically, the storage module may record a location of an interface in which an apparatus interface element UI is located.

The display module 1304 may include, for example, a liquid crystal display (LCD), a light-emitting diode (LED) display, an organic light-emitting diode (OLED) display, a micro-electro-mechanical system (MEMS) display, or an electronic paper display. The display module is configured to display content (for example, a text, an image, a video, an icon, or a symbol) that can be viewed by the user.

Optionally, the apparatus further includes a communication module 1305, configured to support a personal apparatus in communicating with another personal apparatus (through a communication network). For example, the communication module may be connected to a network through wireless communication or wired communication, to communicate with another personal apparatus or a network server. The wireless communication may use at least one of cellular communication protocols, for example, long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

It should be noted that each functional module of the apparatus may perform one or more steps in the foregoing method embodiments.

An embodiment of this application further provides a chip system. As shown in FIG. 22, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the electronic device, the electronic device is enabled to perform the functions or the steps performed by the mobile phone in the method embodiments.

An embodiment of this application further provides a computer program product. When the computer program product runs on a computer, the computer is enabled to perform the functions or the steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. In an actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device switching method, applied to a first electronic device, wherein the method comprises:
displaying a first interface, wherein the first interface comprises an identifier of at least one second electronic device;
receiving an operation of a user on an identifier of a first target device in the at least one second electronic device; and
sending a switching request in response to the operation, wherein the switching request is used to request to switch the first target device from a source access point to which the first target device is currently connected to a target access point.

2. The method according to claim 1, wherein the first interface comprises a first display component, the first display component comprises a first partition, and the first partition comprises an identifier of an electronic device that is connected to the source access point and whose communication quality is within a first range, and/or the first partition comprises an identifier of an electronic device that is not connected to the source access point, whose signal can be detected by the source access point, and whose communication quality is within the first range, wherein the first partition comprises the identifier of the at least one second electronic device.

3. The method according to claim 1, wherein the first partition comprises an identifier of an electronic device whose communication quality is within the first range within a specified space range.

4. The method according to claim 2, wherein the first interface further comprises a second partition, and communication quality of an electronic device in the first partition is lower than communication quality of an electronic device in the second partition.

5. The method according to claim 4, wherein a user interface UI effect of the first partition is different from a UI effect of the second partition.

6. The method according to any one of claims 2 to 5, wherein the method further comprises:
receiving a view indication of the user for the electronic device whose communication quality is within the first range; and
displaying a second display component in response to the view indication, wherein the second display component comprises a third partition corresponding to the first partition, and the third partition comprises the identifier of the at least one second electronic device and an identifier of at least one other electronic device whose communication quality is within the first range.

7. The method according to any one of claims 2 to 5, wherein the method further comprises:
receiving a view operation of the user for an electronic device whose communication quality is within the first range and that is not displayed in the first partition; and
in response to the view operation of the user, displaying, in the first partition, a hidden identifier of another electronic device whose communication quality is within the first range, wherein the another electronic device is a device different from the at least one second electronic device.

8. The method according to any one of claims 1 to 7, wherein the first interface further
comprises an identifier of at least one access point, and the at least one access point comprises the target access point; and
the receiving an operation of a user on an identifier of a first target device in the at least one second electronic device comprises:
receiving an operation of dragging, by the user, the identifier of the first target device to a target region, wherein the target region is a region in which an identifier of the target access point is located.

9. The method according to claim 8, wherein the receiving an operation of dragging, by the user, the identifier of the first target device to a target region comprises:
receiving an operation of dragging, by the user, the identifier of the first target device to a location of the identifier of the target access point to present a collision effect.

10. The method according to any one of claims 1 to 9, wherein the method further comprises:
displaying a notification message, wherein the notification message is used to prompt that current communication quality of the first target device is poor; and
the displaying a first interface comprises: displaying the first interface in response to an operation of the user on the notification message.

11. The method according to any one of claims 1 to 10, wherein the sending a switching request comprises: sending the switching request to a decision access point, wherein the decision access point is the source access point, or the target access point, or an access point other than the source access point and the target access point.

12. A computer-readable storage medium, comprising a program or instructions, wherein when the program or the instructions are executed, an electronic device is enabled to implement the method according to any one of claims 1 to 11.

13. An electronic device, wherein the electronic device comprises a processor and a memory; and
the memory is configured to store computer-executable instructions, and when the electronic device runs, the processor executes the computer-executable instructions stored in the memory, to enable the electronic device to perform the method according to any one of claims 1 to 11.
